# EUROPEAN PATENT SPECIFICATION

(11) **EP 2 787 364 B1**
(45) Date of publication and mention of the grant of the patent: **11.11.2020**
(21) Application number: 14161753.0
(22) Date of filing: 26.03.2014
(51) Int. Cl.: G01S 5/02, H04W 56/00, G01S 5/00, G01S 1/04, H04B 7/26

(54) **Radiobeacon stations, user devices, location determination systems, methods for controlling a radiobeacon station, methods for controlling a user device, and location determination methods**
Funkbakenstationen, Benutzervorrichtungen, Standortbestimmungssysteme, Verfahren zur Steuerung einer Funkbakenstation, Verfahren zur Steuerung einer Benutzervorrichtung und Standortbestimmungsverfahren
Stations de radiobalises et procédé de commande associé, dispositifs utilisateurs et procédé de commande associé, systèmes de détermination d'emplacement, et procédés associés

(30) Priority: 26.03.2013 EP 13250039
(43) Date of publication of application: 08.10.2014
(73) Proprietor: Intel Corporation, Santa Clara, CA 95054 (US)
(72) Inventor: Fleming, Peter Mark, Newbury, RG20 8DN (GB); Whitworth, Gerald, Northampton, NN7 4RT (GB); Anyaegbu, Esther Olulu, Northampton, NN1 1SH (GB)
(74) Representative: Viering, Jentschura & Partner mbB Patent- und Rechtsanwälte

(56) References cited:
- EP-A1- 1 296 467
- WO-A1-99/48233
- WO-A2-02/07458
- WO-A2-2006/122292
- US-A1- 2012 177 027

## Description

### Technical Field

The present disclosure generally relates to radiobeacon stations, user devices, location determination systems, methods for controlling a radiobeacon station, methods for controlling a user device, and location determination methods.

### Background

Over recent years the growth of and demand for Location-Based Services (LBS) has increased rapidly. The key aspect of a Location-Based Service is that information is provided to a user based on a knowledge of the user's current position. As such, LBS can often be referred to as location-aware services, or location-aware systems. Clearly, then, any LBS has to include a means of determining, accurately, reliably and in real-time, the current location of all users. This has led to huge effort being expended by many companies to develop and implement methods for such positioning systems in mass-market devices such as cell-phones, smart-phones, and mobile computers. Thus, there may be a need for an efficient location determination system. US 20012/177027 A1 describes an access point extracting timing information from a navigation satellite signal based upon a known position of the access point. WO 2006/122292 A2 describes synchronizing base stations including time-tagging a frame boundary of a received cellular communication system to determine time-of-day. EP 1 296 467 A1 describes adjusting of time references of terrestrial nodes based on a predefined sequence sent by a satellite viewed by the terrestrial nodes a clear sky view solid angle at a determined common synchronization date. WO 99/48233 A1 describes that ground-based pseudolites support accurate determination of mobile receiver locations by broadcasting CDMA signals interleaved by a TDMA system. WO 02/07458 A2 describes techniques to broadcast position location data from a base station to a number of terminals in a wireless communication system.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radiobeacon station with a satellite receiver, a timing circuit, and a terrestrial transmitter.
- Figure 2: shows a radiobeacon station with a satellite receiver, a timing circuit, a terrestrial transmitter, a down-conversion circuit, a terrestrial receiver, and a control information receiver.
- Figure 3: shows a user device with a terrestrial receiver and a location determination circuit.
- Figure 4: shows a user device with a terrestrial receiver, a location determination circuit, a satellite receiver, and a control information receiver.
- Figure 5: and Figure 6 show location determination systems.
- Figure 7: shows a flow diagram illustrating a method for controlling a radiobeacon station.
- Figure 8: shows a flow diagram illustrating a method for controlling a user device.
- Figure 9: and Figure 10 show flow diagrams illustrating location determination methods.
- Figure 11: shows a radiobeacon station with a satellite receiver, a down-conversion circuit, a terrestrial transmitter, and a configuration circuit.
- Figure 12: shows a radiobeacon station with a satellite receiver, a terrestrial transmitter, a down-conversion circuit, a configuration circuit, a terrestrial receiver, and a control information receiver.
- Figure 13: shows a user device with a terrestrial receiver and a location determination circuit.
- Figure 14: shows a user device with a terrestrial receiver, a location determination circuit, a satellite receiver, and a control information receiver.
- Figure 15: shows a location determination system.
- Figure 16: shows a flow diagram illustrating a method for controlling a radiobeacon station.
- Figure 17: shows a flow diagram illustrating a method for controlling a user device.
- Figure 18: shows a flow diagram illustrating a location determination method.
- Figure 19: shows an illustration of the form of the reference station segment in one example, and its connection to the control segment.
- Figure 20: shows an illustration of the form of the user segment in one example, and its connection to the control segment.

### Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

According to various aspects of this disclosure, a radiobeacon station may receive satellite navigation data and may configure itself (for example may configure a transmitter of the radiobeacon station) based on the received satellite navigation data. For example, instead of synchronizing various radiobeacon stations using cables, the radiobeacon stations may synchronize with each other by configuring themselves (for example configuring an internal clock or configuring a transmitter to transmit beacon signals at pre-determined times) based on time information derivable from the satellite navigation data. For example, instead of manually providing information at which location a radiobeacon station is provided, the radiobeacon station may determine its location based on the satellite navigation data. The radiobeacon station may then configure its transmitter to transmit beacon signals at pre-determined timings (based on the time synchronization) or beacon signals including information about the location of the radiobeacon station (based on the determined location). A radiobeacon station according to various aspects of this disclosure may transmit beacons signals which allow a user device to determine information related to its location (i.e. the location of the user device), for example a distance from the radiobeacon station, or a position relative to the beacon station.

The terms "coupling" or "connection" are intended to include a direct "coupling" or direct "connection" as well as an indirect "coupling" or indirect "connection", respectively.

The word "exemplary" is used herein to mean "serving as an example, instance, or illustration". Any aspect of this disclosure or design described herein as "exemplary" is not necessarily to be construed as preferred or advantageous over other aspect of this disclosure or designs.

The radiobeacon station may include a memory which may for example be used in the processing carried out by the subscriber radiobeacon station. The user device may include a memory which may for example be used in the processing carried out by the user device. A memory may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, for example, a floating gate memory, a charge trapping memory, an MRAM (Magnetoresistive Random Access Memory) or a PCRAM (Phase Change Random Access Memory).

As used herein, a "circuit" may be understood as any kind of a logic implementing entity, which may be special purpose circuitry or a processor executing software stored in a memory, firmware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as for example Java. Any other kind of implementation of the respective functions which will be described in more detail below may also be understood as a "circuit". It may also be understood that any two (or more) of the described circuits may be combined into one circuit.

As used herein, a beacon signal may be a signal that is broadcasted wirelessly to provide information, for example geolocation information, for example information based on which a user device may determine its location. For example, a user device may be able to derive its location (or an estimate of its location) from a plurality of beacon signals received, for example using a method which may be referred to as triangulation or trilateration., for example using a time difference of arrival times of various beacon signals, or for example using angles of arrival of various beacon signals. For example, a user device may determine a time difference of arrivals of a plurality of beacon signals, and the user device may determine its location based on the time difference. For example, a user device may determine an angle of arrival for each of a plurality of beacon signals, and the user device may determine its location based on the angles of arrival. For example, the beacon signal may be sufficient for determining the location of the user device. For example, a beacon signal may be transmitted according to at least one of the following radio access technologies: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

As used herein, it will be understood that down-converting may refer to any processing that is performed to determine information which is included in a signal, wherein for example the frequency of the signal is higher than the frequency of the information included in the signal. It will be understood that when referring to down-converting, at the same time or subsequent to the down-converting further processing may be performed, for example decoding.

Description is provided for devices, and description is provided for methods. It will be understood that basic properties of the devices also hold for the methods and vice versa. Therefore, for sake of brevity, duplicate description of such properties may be omitted.

It will be understood that any property described herein for a specific device may also hold for any device described herein. It will be understood that any property described herein for a specific method may also hold for any method described herein.

Over recent years the growth of and demand for Location-Based Services (LBS) has increased rapidly. The key aspect of a Location-Based Service is that information is provided to a user based on a knowledge of the user's current position. As such, LBS can often be referred to as location-aware services, or location-aware systems. Clearly, then, any LBS has to include a means of determining, accurately, reliably and in real-time, the current location of all users. This has led to huge effort being expended by many companies to develop and implement methods for such positioning systems in mass-market devices such as cell-phones, smart-phones, and mobile computers.

An easy and cheap way for real-time navigation and positioning functionality to be implemented in a consumer device is by the inclusion of a Global Navigation Satellite System (GNSS) chipset. GNSS-enabled consumer devices are now widespread and are becoming even more common. The level of performance, cost, size and power-consumption of GNSS chipsets has improved over the past few years. However, the level of performance achieved (in terms of positioning accuracy and availability) is highly dependent on the local environment of the user. In particular, the performance achieved in indoor locations - i.e., with heavily-obstructed lines-of-sight to the GNSS satellite vehicles (SVs) - usually falls below that required by providers and users of LBS.

Numerous alternatives to GNSS exist for determining the location of users indoors. In addition, various means and methods for combining data from a wide variety of sources and separate systems have been, and are continuing to be, investigated and, in some cases, implemented in successful products. For example, any signal or physical characteristic which can be measured, and which depends in some way on the location, motion or attitude of the measuring unit, can be used as a source of useful input to help determine position or change in position. Radio, acoustic and optical signals can all, and have all, been the basis for carrying useful information. The types of parameters measured include, but are certainly not limited to, signal strength, time of arrival of an event, difference in time of arrival of two events, phase, and phase difference. The range of possible sources of useful data is wide. However, currently there is no system or combination of systems that can be considered as satisfying all the demands and requirements of providers and users of LBS.

For any indoor location system an important aspect is the provision of any required infrastructure. The cost and time of installing such infrastructure, including the completion of any calibration activities required, can be high. In some cases, where the provision of an indoor location system might essentially be permanent (for example, an indoor location system serving a shopping mall), the cost and time required in setting up the system might not be particularly important. However, in other cases, particularly where the lifetime of the location system is intended to be short, the installation cost and time will be of major importance.

The time required to install any necessary infrastructure is also of crucial importance for systems which are intended to support the real-time location of emergency workers, such as fire-fighters. Clearly, in situations such as are faced by fire-fighters, any infrastructure required by the indoor location system must be quick and easy to install and calibrate (or configure).

According to various aspects of this disclosure, devices and methods may be provided for combining data from one particular type of location system with data from GNSS in order better to be able to meet the demands and requirements of LBS and emergency services for indoor location determination. In one example, the location system may use the measurement of the time of arrival of signal 'pulses' transmitted or received by a number of reference stations. There are a number of such systems which have been tried, with varying levels of commercial and technical success. Probably the most successful have been those which transmit either ultrasonic or Ultra Wide Band (UWB) RF signals. It will be understood that although details of one particular UWB system will be described herein as an example to help describe the advantages and disadvantages of such systems, the use of the methods and devices described is not limited to this type of system.

An exemplary UWB Real-Time Location System (RTLS) may include a number of sensors at fixed locations and a number of tags located on the objects for which positions are to be determined. The sensors may be grouped into cells which for example may be rectangular in shape with additional sensors being added to a cell depending on the geometry of the area to be covered. Each of the tags transmits UWB pulses of extremely short duration at set intervals. Each sensor may have an array of four UWB receivers which receives the pulses transmitted by the tags. The location of each tag is then determined by combining all the measurements made at the different sensors for that tag using Time-Difference-of-Arrival (TDoA) and Angle-of-Arrival (AoA) techniques.

In addition to the UWB signal, the system may use a conventional bidirectional 2.4 GHz radio for control and telemetry purposes. One of the sensors in each cell is designated as being the master and the others are referred to as slaves. In each cell the master sensor coordinates the activities of the other sensors and communicates with all the tags whose location is detected within the cell. By designing overlapping cells, it is possible to cover very large areas.

The locations of the sensors need to be determined as part of the system installation. In addition, because the system uses AoA measurements, the orientation of the sensor units need to be accurately calibrated. The sensors are synchronized to each other (but not to the tags) by means of inter-connecting cables.

In such a system:
- The sensors and tags are quite complex.
- The tags are not synchronized to the sensors, hence an extra ToA measurement is required for each tag in order to determine time synchronization.
- The sensors are additionally complex due to their supporting AoA measurements - this so as to offset the performance degradation due to lack of synchronization.
- The positions of the tags are computed remotely - hence, there's a need for a communication channel to each tag if the tag requires to know its own position.
- The tags are active, and there's a need to take steps to be able to distinguish between different ones. This can be achieved through a form of CDMA, whereby different tags use different pseudorandom codes. However, the requirement to use different signals for different tags increases the complexity of the system. It also increases the likelihood of interference within the UWB system itself and with other systems in the same vicinity.
- The tags are active, which means that the 'control center' needs to do more work as more users are added to the system.
- The timing synchronization between the sensors is achieved by physically connecting them together, which means that that the installation process is time-consuming and disruptive.
- The timing synchronization between the sensors is such that the system needs to be calibrated, in order to determine the transmission delay through each cable, for example. This is a very time-consuming process.
- The system is stand-alone, in that the only information available to be used to determine position is that from the system itself. That is, it's an 'all or nothing' system.
- The system does not provide any means of supporting positioning while the user is in the transition zone between being outside and inside the area covered by the system. That is, the transition from the outdoor environment to the indoor is not supported.

The problem of time-synchronization between the sensors is one which is common to a number of different indoor location systems. For example, the idea and practice of using pseudolites for indoor positioning has been around for a long time. Pseudolites are, in effect, simplified GNSS satellites which are located at fixed positions on the ground, and which transmit GNSS-like signals. Several methods of time synchronization of the pseudolites have been proposed: the simplest one in theory may be to link the various transmitters by wire. In such a case a sort of calibration phase is required in order to know precisely the delay between pseudolites. Another simple approach may be to locate pseudolites in places where the GNSS signals are available, for example outdoors, and to use the constellation time to synchronize the transmitters.

The above is also applicable to any indoor ranging system. That is, achieving time synchronization by physically connecting the elements may be simple in principle but causes numerous practical problems, and achieving it by making use of GNSS signals is simple in both principle and practice but only provided that the GNSS signals are sufficiently strong to allow precise time to be determined from them. Clearly, the need for strong GNSS signals precludes the use of this method in most indoor locations.

Three main causes of these problems can be identified in the above, which may be referred to as the synchronization, isolation and calibration problems.

First, the synchronization problem will be considered. In order to determine the position of one or more users using a ranging system it is necessary to measure or somehow derive or estimate the distance between each user and each of a number of reference stations whose locations at the time of the measurements are known. In three-dimensional space, a minimum of three such distances is required. In practice, the distances are usually derived by measuring the time of flight of a signal transmitted between the reference station and the user. In order to be able to achieve this directly, all the reference stations and all the users need to be operating using a common time-base. Systems for which this is the case are referred to as being synchronized. In an unsynchronized system, the reference stations are synchronized to each other, but the user time-bases are asynchronous. In this case, each user has to determine the offset between its own time-base and that of the reference stations. This requires an extra time-of-arrival measurement to be made - that is, in three-dimensional space, a minimum of four time-of-arrival measurements are required rather than the minimum of three required for a synchronized system. A third alternative requires no synchronization at all. In this system, rather than measuring the one-way time-of-flight, the two-way (or round-trip) times-of-flight between each user and the reference stations are measured. That is, the user transmits a signal which the reference stations effectively reflect back to the user, perhaps with a constant delay. Such a system could be thought of as being self-synchronized. A synchronized system has the greatest potential accuracy, but poses the greatest practical difficulties in terms of how to achieve the necessary synchronization. A two- way time-of-flight system is by far the simplest in terms of synchronization requirements but this advantage comes with numerous other costs, not least the extra complexity of the hardware required and the limitations such a system imposes on the number of users that can be supported. An asynchronous system is a good compromise, but such a system still has many practical problems.

The isolation problem refers to how the system relates to other positioning systems in the same vicinity, and how the system can be combined with other positioning systems in the same vicinity. These two aspects are best explained by example. Firstly, consider a shopping mall which has its own positioning system, which provides positions referenced to a local coordinate system. A user approaching the shopping mall, using a GPS (Global Positioning System) receiver, would be provided with GPS position fixes as latitudes and longitudes, which could be mapped with one or another mapping applications. Once inside the mall, however, the position fixes available would be referenced to the local coordinate system, and hence could not be mapped on the same map as was used for the GPS position fixes, unless the mapping software had access to the transformation parameters to convert from one system to the other. Secondly, consider the 'transition zone', where the GPS signal availability might be dropping (due to obstruction of the lines-of-sight to the satellites) and hence the GPS position fixes might be of relatively poor quality, but where the user had not fully entered the service area of the terrestrial system and so still only had poor-quality terrestrial position fixes. The user would have available two different position fixes, both being of poor quality. Clearly, in such a case the most desirable situation would be for the user to be able to combine the information available from the two separate systems, in such a way as to be able to compute a better position estimate than was available from either system individually.

The calibration problem can be explained by considering two questions. Firstly, if the system is synchronized, how is the necessary synchronization achieved? If it is achieved by sending signals over cables or wires, then, clearly, the delays caused by the transmission through the cables need to be accounted for. That is, the system needs to be calibrated to determine the delays introduced at various stages of the synchronization process. Secondly, given that the coordinates of the reference stations need to be known, how are these coordinates to be determined? Usually, for an indoor location system, the answer to this is that a time-consuming and expensive survey is required.

Devices and methods provided in accordance with various aspects of this disclosure address one or more of these three causes, and numerous of the resulting, associated, problems. Some examples allow for a combined satellite and terrestrial system for which there is no need for any specific, non-automated, calibration stage (although some calibration can be beneficial), and which allows for the combination of data from the different systems in such a way as to be able to provide position fixes even when neither system is capable of providing a position fix on its own, and in such a way as to provide a seamless transition between outdoor and indoor locations.

According to various aspects of this disclosure, an efficient location determination system may be provided.

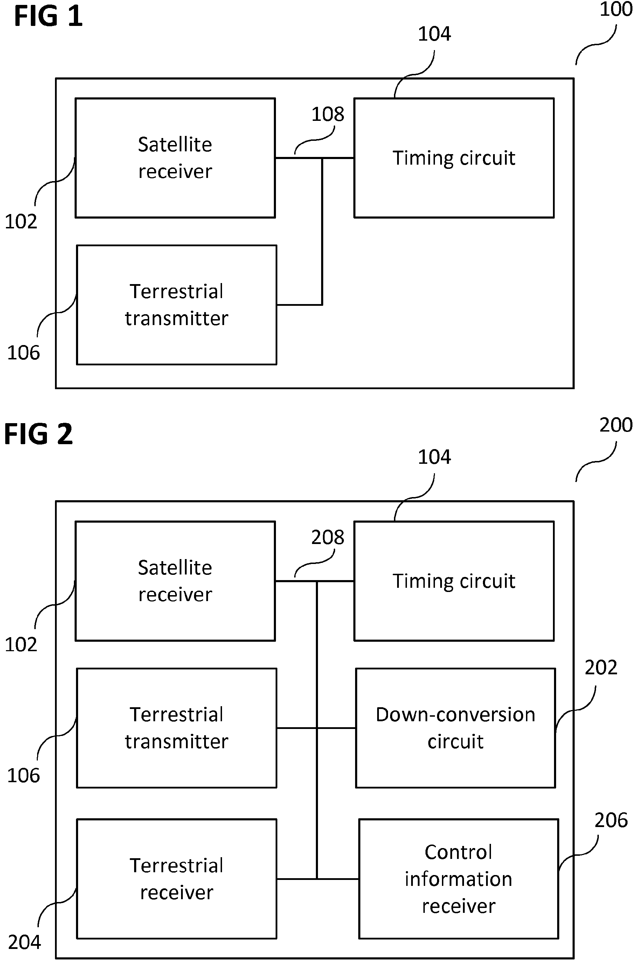

Figure 1 shows a radiobeacon station 100. The radiobeacon station 100 may include a satellite receiver 102 configured to receive satellite navigation data from a satellite. The radiobeacon station 100 may further include a timing circuit 104 configured to determine a timing scheme based on the satellite navigation data. The radiobeacon station 100 may further include a terrestrial transmitter 106 configured to transmit a plurality of beacon signals based on (for example in accordance with) the determined timing scheme. The satellite receiver 102, the timing circuit 104, and the terrestrial transmitter 106 may be coupled with each other, for example via a connection 108, for example an optical connection or an electrical connection, such as for example a cable or a computer bus or via any other suitable electrical connection to exchange electrical signals. It will be understood that although the satellite receiver 102, the timing circuit 104, and the terrestrial transmitter 106 are illustrated in Figure 1 separately and are described separately, all of them or some of them may be provided in a single circuit, in which the connection 108 may be a data connection.

In other words, the radiobeacon station may set times at which (in other words: a timing according to which) it sends the radiobeacon signals based on received satellite navigation data.

Figure 2 shows a radiobeacon station 200. The radiobeacon station 200 may, similar to the radiobeacon station 100 of Figure 1, include a satellite receiver 102 configured to receive satellite navigation data from a satellite. The radiobeacon station 200 may, similar to the radiobeacon station 100 of Figure 1, further include a timing circuit 104 configured to determine a timing scheme based on the satellite navigation data. The radiobeacon station 200 may, similar to the radiobeacon station 100 of Figure 1, further include a terrestrial transmitter 106 configured to transmit a plurality of beacon signals based on (for example in accordance with) the determined timing scheme. The radiobeacon station 200 may further include a down-conversion circuit 202, like will be described in more detail below. The radiobeacon station 200 may further include a terrestrial receiver 204, like will be described in more detail below. The radiobeacon station 200 may further include a control information receiver 206, like will be described in more detail below. The satellite receiver 102, the timing circuit 104, the terrestrial transmitter 106, the down-conversion circuit 202, the terrestrial receiver 204, and the control information receiver 206 may be coupled with each other, for example via a connection 208, for example an optical connection or an electrical connection, such as for example a cable or a computer bus or via any other suitable electrical connection to exchange electrical signals. It will be understood that although The satellite receiver 102, the timing circuit 104, the terrestrial transmitter 106, the down-conversion circuit 202, the terrestrial receiver 204, and the control information receiver 206 are illustrated in Figure 2 separately and are described separately, all of them or some of them may be provided in a single circuit, in which the connection 208 may be a data connection.

The down-conversion circuit 202 may be configured to determine satellite information included in the satellite navigation data based on down-converting the satellite navigation data. The timing circuit 104 may further be configured to determine the timing scheme based on the satellite information.

The satellite receiver 102 may further be configured to receive satellite navigation data according to a navigation standard. The terrestrial transmitter 106 may be configured to transmit the beacon signals according to a communication standard different from the navigation standard.

The navigation standard may include or may be at least one of the following a navigation standard: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The communication standard may include or may be at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

The terrestrial transmitter 106 may be further configured to transmit the plurality of beacon signals including a location information. The location information may be based on the satellite navigation data.

The terrestrial receiver 204 may be configured to receive a beacon signal from another radiobeacon station (not shown in Figure 2). The terrestrial transmitter 106 may be further configured to transmit a time of arrival of the beacon signal received from the other radiobeacon station.

The control information receiver 206 may be configured to receive control information. The timing circuit 104 may further be configured to determine the timing scheme based on the control information.

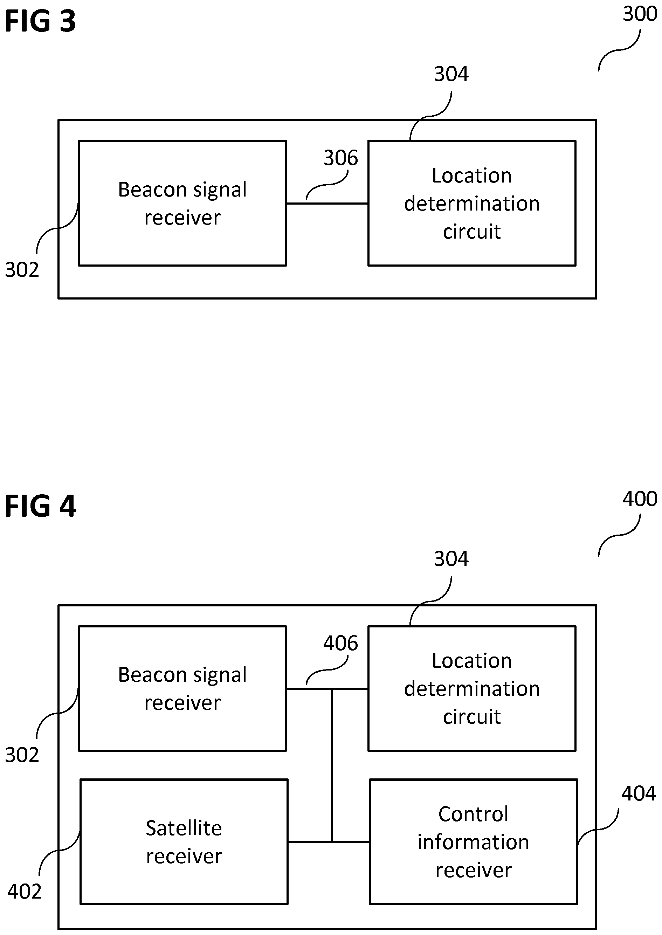

Figure 3 shows a user device 300. The user device 300 may include a beacon signal receiver 302 configured to receive a beacon signal from a radiobeacon station (for example a radiobeacon station as shown in Figure 1 or Figure 2). The radiobeacon station may include a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme. The user device 300 may further include a location determination circuit 304 configured to determine information indicating a location of the user device based on the received beacon signal. The beacon signal receiver 302 and the location determination circuit 304 may be coupled with each other, for example via a connection 306, for example an optical connection or an electrical connection, such as for example a cable or a computer bus or via any other suitable electrical connection to exchange electrical signals. It will be understood that although the beacon signal receiver 302 and the location determination circuit 304 are illustrated in Figure 3 separately and are described separately, all of them or some of them may be provided in a single circuit, in which the connection 306 may be a data connection.

The location determination circuit 304 may further be configured to determine the information indicating the location of the user device based on at least one of a time of arrival of the beacon signal or an angle of arrival of the beacon signal.

The beacon signal receiver 302 may be configured according to at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

Figure 4 shows a user device. The user device 400 may, similar to the user device shown in Figure 3, include a beacon signal receiver 302 configured to receive a beacon signal from a radiobeacon station (for example a radiobeacon station as shown in Figure 1 or Figure 2). The radiobeacon station may include a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme. The user device 400 may, similar to the user device shown in Figure 3, further include a location determination circuit 304 configured to determine information indicating a location of the user device based on the received beacon signal. The user device 400 may further include a satellite receiver 402, like will be described in more detail below. The user device 400 may further include a control information receiver 404, like will be described in more detail below. The beacon signal receiver 302, the location determination circuit 304, the satellite receiver 402, and the control information receiver 404 may be coupled with each other, for example via a connection 406, for example an optical connection or an electrical connection, such as for example a cable or a computer bus or via any other suitable electrical connection to exchange electrical signals. It will be understood that although the beacon signal receiver 302, the location determination circuit 304, the satellite receiver 402, and the control information receiver 404 are illustrated in Figure 4 separately and are described separately, all of them or some of them may be provided in a single circuit, in which the connection 406 may be a data connection.

The satellite receiver 402 may be configured to receive satellite navigation data from a satellite (not shown in Figure 4).

The satellite receiver 402 may be configured according to at least one of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The location determination circuit 304 may further be configured to determine the location of the user device further based on the satellite navigation data.

The control information receiver 404 may further be configured to receive control information indicating a timing of the beacon signal.

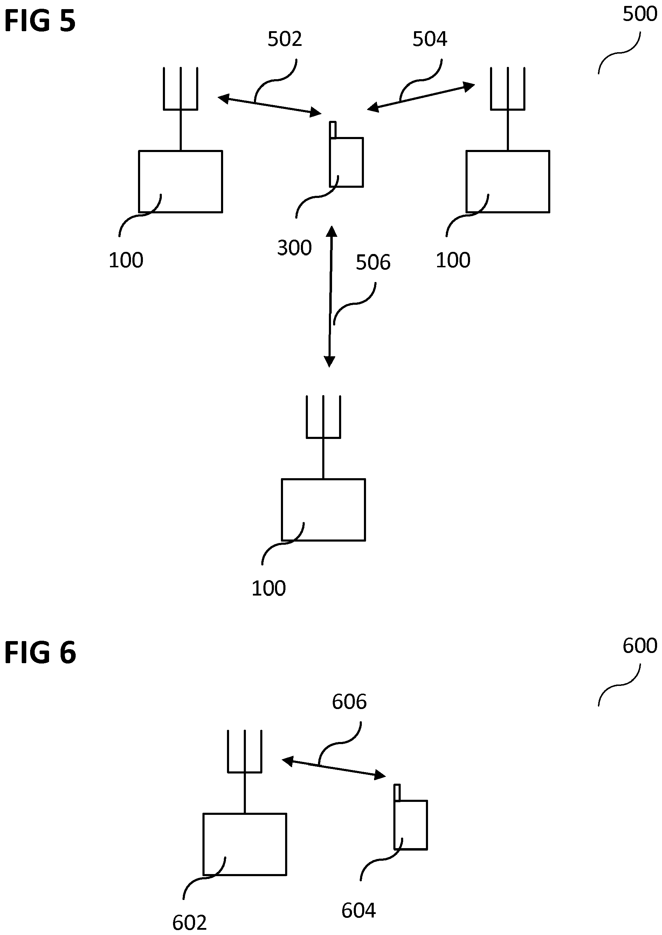

Figure 5 shows a location determination system 500. The location determination system 500 may include a plurality of radiobeacon stations 100. In Figure 5, for example three radiobeacon stations 100 are shown. It will be understood that each radiobeacon station 100 may be identical or similar to a radiobeacon station as described with reference to Figure 1 or Figure 2 above. Each radiobeacon station may include: a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme (for example illustrated as arrows 502, 504, and 506 in Figure 5. The location determination system 500 may further include a user device 300. It will be understood that the user device 300 may be similar or identical to a user device as described with reference to Figure 3 or Figure 4 above. The user device 300 may include: a beacon signal receiver configured to receive a beacon signal from a radiobeacon station (or a plurality of beacon signals, for example receive a first beacon signal 502 from a first radiobeacon station, a second beacon signal 504 from a second radiobeacon station, and a third beacon signal 506 from a third radiobeacon station); and a location determination circuit configured to determine information indicating a location of the user device based on the received beacon signal. It will be understood that more than one user device may be provided, and that each user device may receive beacon signals from the radiobeacon stations.

The plurality of radiobeacon stations 100 may be configured to time-synchronize based on the satellite information.

Figure 6 shows a further location determination system. The location determination system may include a radio beacon station 602 and a user device 604, which may be communicating, like shown by arrow 606. The radiobeacon station 602 may include: a satellite receiver configured to receive satellite navigation data from a plurality of satellites; a location determination circuit configured to determine information indicating a location of the radiobeacon station based on the satellite navigation data received from the plurality of satellites; and a terrestrial transmitter configured to transmit a plurality of beacon signals, each beacon signal including the determined information indicating the location of the radiobeacon station. The user device 604 may include: a beacon signal receiver configured to receive a beacon signal from the radiobeacon station; and a location determination circuit configured to determine information indicating a location of the user device based on at least one of a time of arrival of the beacon signal or an angle of arrival of the beacon signal.

The radiobeacon station 602 may further include a down-conversion circuit configured to determine satellite information included in the satellite navigation data based on down-converting the satellite navigation data. The location determination may is be further configured to determine the information indicating the location of the radiobeacon station based on the satellite information.

The satellite receiver of the radiobeacon station 602 may be configured to receive satellite navigation data according to a navigation standard. The terrestrial transmitter of the radiobeacon station 602 may be configured to transmit the beacon signals according to a communication standard different from the navigation standard.

The navigation standard may include or may be at least one of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The communication standard may include or may be at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

The radiobeacon station 602 may further include a timing circuit configured to determine a timing scheme based on the satellite navigation data. The terrestrial transmitter of the radiobeacon station 602 may further be configured to transmit the plurality of beacon signals based on (for example in accordance with) the determined timing scheme.

The radiobeacon station 602 may further include a terrestrial receiver configured to receive a beacon signal from another radiobeacon station. The terrestrial transmitter of the radiobeacon station 602 may further be configured to transmit a time of arrival of the beacon signal received from the other radiobeacon station.

The radiobeacon station 602 may further include a control information receiver configured to receive control information. The timing circuit of the radiobeacon station 602 may further be configured to determine the timing scheme based on the control information.

The beacon signal receiver of the user device 604 may be configured according to at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

The user device 604 may further include a satellite receiver configured to receive satellite navigation data from a satellite.

The satellite receiver of the user device 604 may be configured according to at least one of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The location determination circuit of the user device 604 may further be configured to determine the location of the user device further based on the satellite navigation data.

The user device 604 may further include a control information receiver configured to receive control information indicating a timing of the beacon signal.

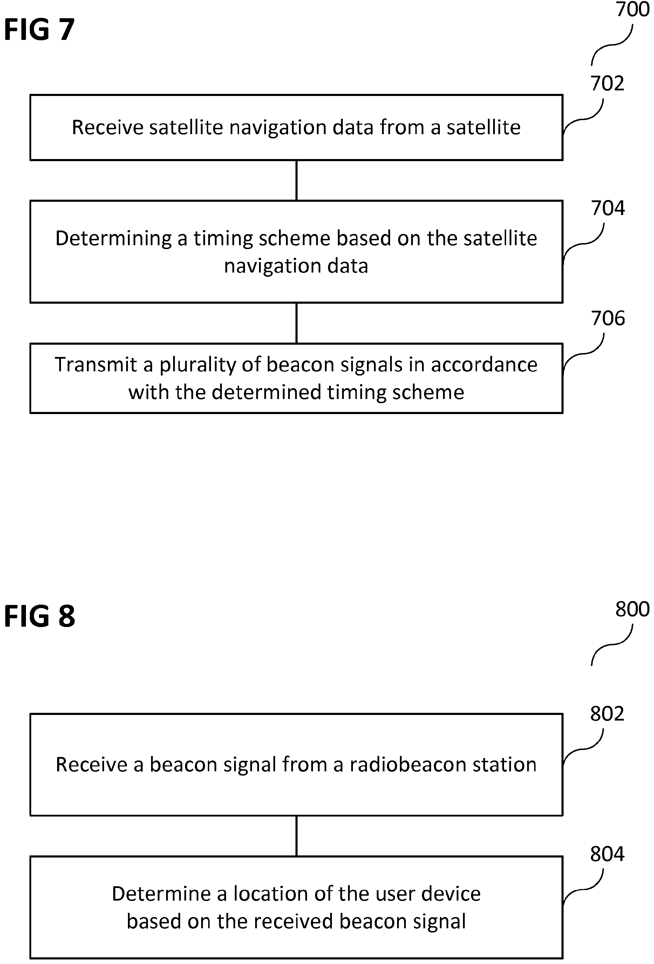

Figure 7 shows a flow diagram 700 illustrating a method for controlling a radiobeacon station. In 702, a satellite receiver of the radiobeacon station may receive satellite navigation data from a satellite. In 704, a timing circuit of the radiobeacon station may determine a timing scheme based on the satellite navigation data. In 706, a terrestrial transmitter of the radiobeacon station may transmit a plurality of beacon signals based on (for example in accordance with) the determined timing scheme.

The method may further include: determining satellite information included in the satellite navigation data based on down-converting the satellite navigation data; and determining the timing scheme based on the satellite information.

The method may further include: receiving satellite navigation data according to a navigation standard; and transmitting the beacon signals according to a communication standard different from the navigation standard.

The navigation standard may include or may be at least one of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The communication standard may include or may be at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

The method may further include transmitting the plurality of beacon signals including a location information, the location information based on the satellite navigation data.

The method may further include: receiving a beacon signal from another radiobeacon station; and transmitting a time of arrival of the beacon signal received from the other radiobeacon station.

The method may further include: receiving control information; and determining the timing scheme based on the control information.

Figure 8 shows a flow diagram 800 illustrating a method for controlling a user device. In 802, a beacon signal receiver of the user device may receive a beacon signal from a radiobeacon station. The radiobeacon station may include a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme. In 804, a location determination circuit of the user device may determine information indicating a location of the user device based on the received beacon signal.

The method may further include determining the information indicating the location of the user device based on at least one of a time of arrival of the beacon signal or an angle of arrival of the beacon signal.

The method may further include receiving the beacon signal according to at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

The method may further include receiving satellite navigation data from a satellite.

The method may further include receiving the satellite navigation data according to at least one of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The method may further include determining the location of the user device further based on the satellite navigation data.

The method may further include receiving control information indicating a timing of the beacon signal.

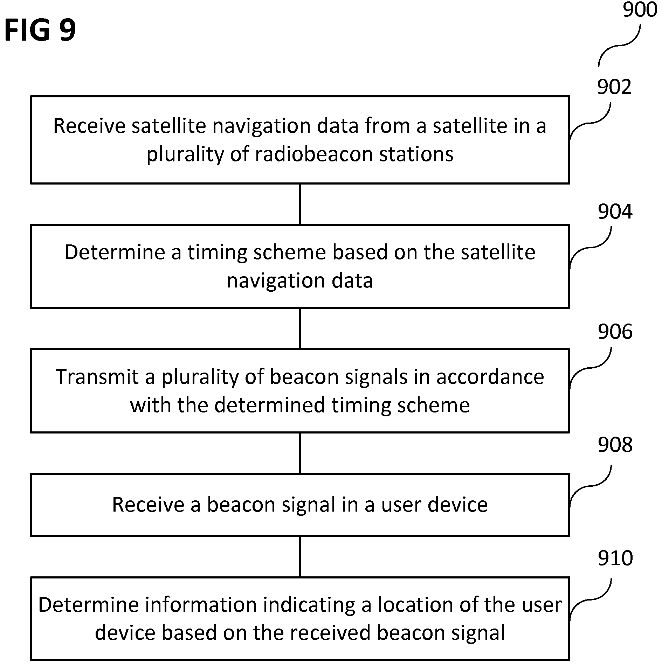

Figure 9 shows a flow diagram 900 illustrating a location determination method. In 902, a plurality of radiobeacon stations may receive satellite navigation data from a satellite. In 904, each radiobeacon station may determine a timing scheme based on the satellite navigation data. In 906, each radiobeacon station may transmit a plurality of beacon signals based on (for example in accordance with) the determined timing scheme. In 908, a user device may receiving a beacon signal of the plurality of beacon signals. In 910, the user device may determine information indicating a location of the user device based on the received beacon signal.

The plurality of radiobeacon stations may be configured to time-synchronize based on the satellite information.

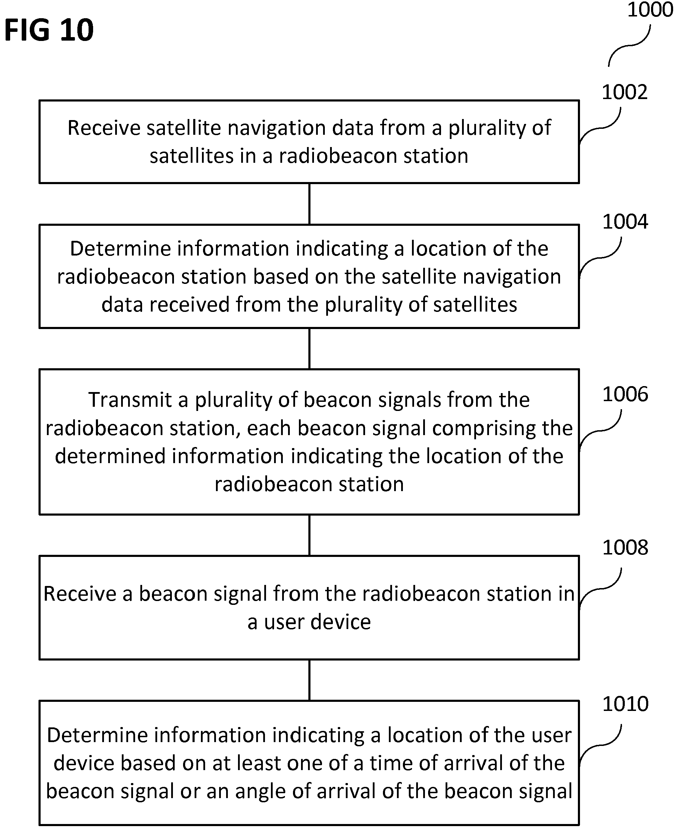

Figure 10 shows a flow diagram 1000 illustrating a location determination method. In 1002, a radiobeacon station may receiving satellite navigation data from a plurality of satellites in a radiobeacon station. In 1004, the radiobeacon station may determine information indicating a location of the radiobeacon station based on the satellite navigation data received from the plurality of satellites. In 1006, the radiobeacon station may transmit a plurality of beacon signals. Each beacon signal may include the determined information indicating the location of the radiobeacon station. In 1008, a user device may receive a beacon signal from the radiobeacon station in a user device. In 1010, the user device may determine information indicating a location of the user device based on at least one of a time of arrival of the beacon signal or an angle of arrival of the beacon signal.

The location determination method may further include: determining in the radiobeacon station satellite information included in the satellite navigation data based on down-converting the satellite navigation data; and determining the information indicating the location of the radiobeacon station based on the satellite information.

The location determination method may further include: receiving satellite navigation data in the radiobeacon station according to a navigation standard; and transmitting the beacon signals from the radiobeacon station according to a communication standard different from the navigation standard.

The navigation standard may include at least one of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The communication standard may include at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

The location determination method may further include: determining a timing scheme based on the satellite navigation data; and transmitting the plurality of beacon signals based on (for example in accordance with) the determined timing scheme.

The location determination method may further include: receiving a beacon signal from another radiobeacon station in the radiobeacon station; and transmitting a time of arrival of the beacon signal received from the other radiobeacon station from the radiobeacon station.

The location determination method may further include: receiving control information in the radiobeacon station; and determining the timing scheme based on the control information.

The location determination method may further include receiving the beacon signal according to at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

The location determination method may further include receiving satellite navigation data from a satellite in a user device.

The location determination method may further include receiving the satellite navigation data from the satellite in the user device according to at least one of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The location determination method may further include determining the location of the user device further based on the satellite navigation data.

The location determination method may further include receiving in the user device control information indicating a timing of the beacon signal.

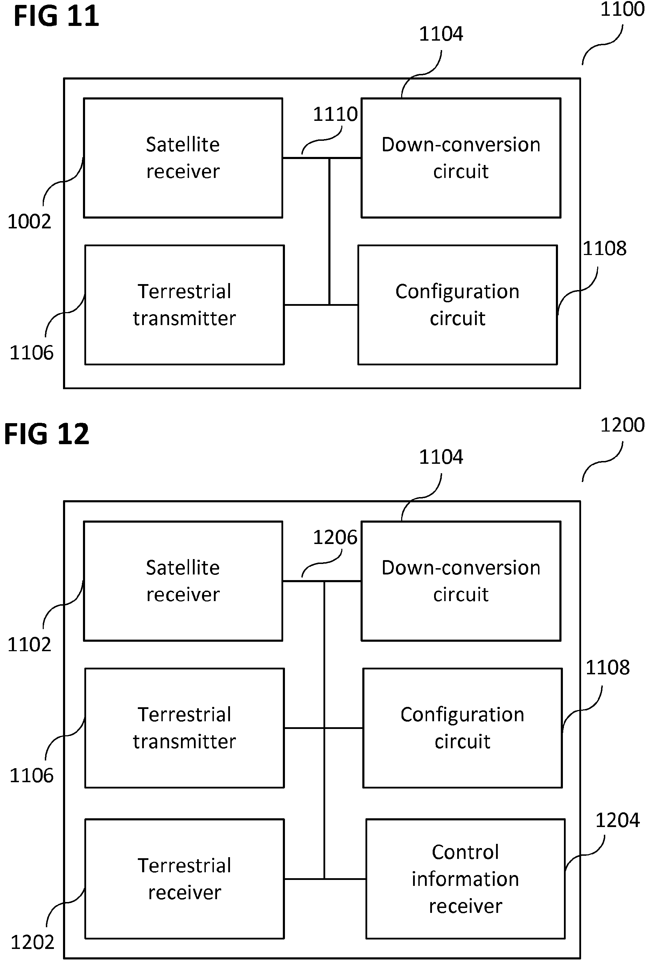

Figure 11 shows a radiobeacon station 1100. The radiobeacon station 1100 may include a satellite receiver 1102 configured to receive satellite navigation data from a satellite. The radiobeacon station 1100 may further include a down-conversion circuit 1104 configured to determine satellite information included in the satellite navigation data based on down-converting the satellite navigation data. The radiobeacon station 1100 may further include a terrestrial transmitter 1106 configured to transmit beacon signals. The radiobeacon station 1100 may further include a configuration circuit 1108 configured to configure the terrestrial transmitter based on the satellite navigation data. The satellite receiver 1102, the down-conversion circuit 1104, the terrestrial transmitter 1106, and the configuration circuit 1108 may be coupled with each other, for example via a connection 1110, for example an optical connection or an electrical connection, such as for example a cable or a computer bus or via any other suitable electrical connection to exchange electrical signals. It will be understood that although the satellite receiver 1102, the downconversion circuit 1104, the terrestrial transmitter 1106, and the configuration circuit 1108 are illustrated in Figure 11 separately and are described separately, all of them or some of them may be provided in a single circuit, in which the connection 1110 may be a data connection. For example, it will be understood that although the downconversion circuit 1104 is shown separately from the satellite receiver 1102, the downconversion circuit 1104 may be included in the satellite receiver 1102 as a part of the satellite receiver 1102.

In other words, the radiobeacon station 1100 may use satellite navigation data to configure a transmitting of terrestrial beacon signals. For example, the radiobeacon station 1100 may receive satellite navigation data from a satellite and may use the information included in the satellite navigation data to determine how the terrestrial transmitter is to transmit its own beacon signals. In other words, the beacon signals may be beacon signals that are different from the satellite navigation data, but that may for example be transmitted at time slots which the radiobeacon station 1100 determines based on the satellite navigation data, or which may include location information which the radiobeacon station 1100 determines based on the satellite navigation data. For example, the radiobeacon station 1100 may determine its location based on the satellite navigation data, and may transmit beacon signals based on the determined location. For example, the radiobeacon station 1100 may use satellite navigation data to synchronize itself with a further radiobeacon station, and to provide its own beacon signals based on the synchronization.

The satellite receiver 1102 may be configured to receive satellite navigation data according to a navigation standard. The terrestrial transmitter 1106 may be configured to transmit the beacon signals according to a communication standard different from the navigation standard.

The navigation standard may include or may be a communication of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The communication standard may include or may be a communication standard of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard).

The configuration circuit 1108 may be configured to configure the terrestrial transmitter 1106 based on the satellite information to be time-synchronized to at least one further radiobeacon station (not shown in Figure 11).

The configuration circuit 1108 may be configured to configure the terrestrial transmitter 1106 to transmit the beacon signals at pre-determined timings, the pre-determined timings based on the satellite navigation data. In other words, the radiobeacon station 1100 may use satellite navigation data to configure timings at which the terrestrial transmitter 1106 transmits the beacon signals.

The configuration circuit 1108 may be configured to configure the terrestrial transmitter 1106 to transmit the beacon signals including a location information, wherein the location information is based on the satellite navigation data. In other words, the radiobeacon station 1100 may use location information based on the satellite navigation data, and the terrestrial transmitter 1106 may include the location information in the beacon signals.

Figure 12 shows a radiobeacon station 1200. The radiobeacon station 1200 may, similar to the radiobeacon station 1100 of Figure 11, include a satellite receiver 1102 configured to receive satellite navigation data from a satellite. The radiobeacon station 1200 may, similar to the radiobeacon station 1100 of Figure 11, further include a down-conversion circuit 1104 configured to determine satellite information included in the satellite navigation data based on down-converting the satellite navigation data. The radiobeacon station 1200 may, similar to the radiobeacon station 1100 of Figure 11, further include a terrestrial transmitter 1106 configured to transmit beacon signals. The radiobeacon station 1200 may, similar to the radiobeacon station 1100 of Figure 11, further include a configuration circuit 1108 configured to configure the terrestrial transmitter based on the satellite navigation data. The radiobeacon station 1200 may further include a terrestrial receiver 1202, like will be described in more detail below. The radiobeacon station 1200 may further include a control information receiver 1204, like will be described in more detail below. The satellite receiver 1102, the down-conversion circuit 1104, the terrestrial transmitter 1106, the configuration circuit 1108, terrestrial receiver 1202, and the control information receiver 1204 may be coupled with each other, for example via a connection 1206, for example an optical connection or an electrical connection, such as for example a cable or a computer bus or via any other suitable electrical connection to exchange electrical signals. It will be understood that although the satellite receiver 1102, the terrestrial transmitter 1106, the configuration circuit 1108, terrestrial receiver 1202, and the control information receiver 1204 are illustrated in Figure 12 separately and are described separately, they may be provided in a single circuit, in which the connection 1206 may be a data connection

The terrestrial receiver 1202 may be configured to receive a beacon signal from another radiobeacon station (not shown in Figure 12). The terrestrial transmitter 1106 may further be configured to transmit a time of arrival of the beacon signal received from the other radiobeacon station.

The control information receiver 1204 may be configured to receive control information. The control information receiver 1204 and the terrestrial receiver 1202 may be a single receiver (in other words: a common receiver). The terrestrial transmitter 1106 may be configured to transmit the beacon signals at pre-determined timings, wherein the pre-determined timings may be based on the control information.

The terrestrial receiver 1202 may be configured according to the communication standard. The control information receiver 1204 may be configured according to the communication standard.

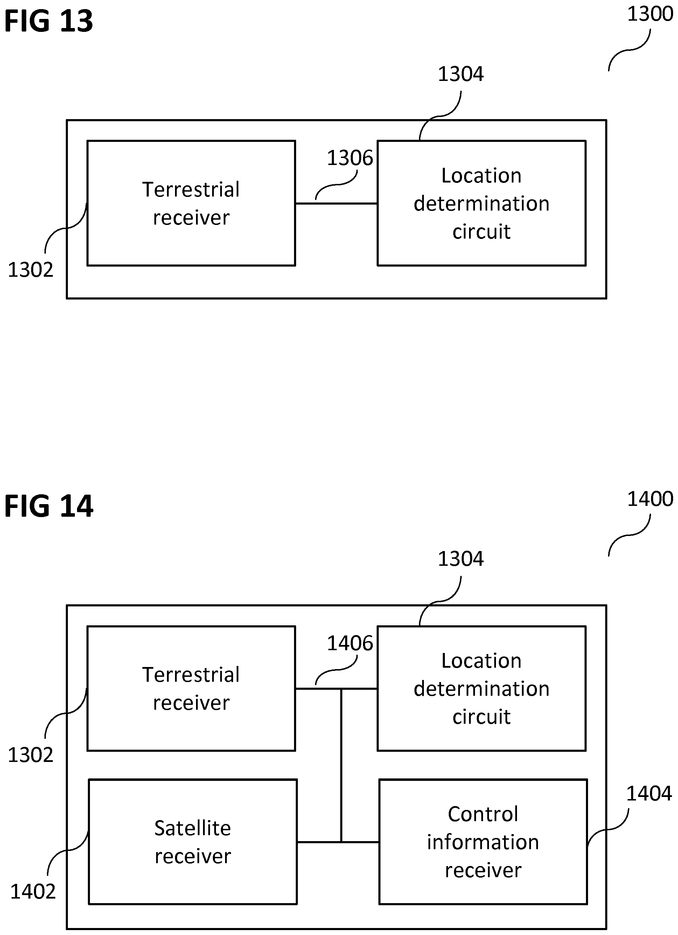

Figure 13 shows a user device 1300. The user device 1300 may include a terrestrial receiver 1302 configured to receive a beacon signal from a radiobeacon station (for example a radiobeacon station as shown in Figure 11 or Figure 12). The radiobeacon station may include a satellite receiver configured to receive satellite navigation data from a satellite, a down-conversion circuit configured to determine satellite information included in the satellite navigation data based on down-converting the satellite navigation data, a terrestrial transmitter configured to transmit beacon signals, and a configuration circuit configured to configure the terrestrial transmitter based on the satellite information. The user device 1300 may further include a location determination circuit 1304 configured to determine a location of the user device based on the received beacon signal. The terrestrial receiver 1302 and the location determination circuit 1304 may be coupled with each other, for example via a connection 1306, for example an optical connection or an electrical connection, such as for example a cable or a computer bus or via any other suitable electrical connection to exchange electrical signals. It will be understood that although the terrestrial receiver 1302 and the location determination circuit 1304 are illustrated in Figure 13 separately and are described separately, they may be provided in a single circuit, in which the connection 1306 may be a data connection.

In other words, the user device 1300 may determine its location (or an approximation of its location, or data representing its location or its approximate location) based on beacon signals received from the radiobeacon station.

The terrestrial receiver 1302 may be configured according to at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard).

Figure 14 shows a user device 1400. The user device 1400 may, similar to the user device 1300 of Figure 13, include a terrestrial receiver 1302 configured to receive a beacon signal from a radiobeacon station (for example a radiobeacon station as shown in Figure 11 or Figure 12). The radiobeacon station may include a satellite receiver configured to receive satellite navigation data from a satellite, a down-conversion circuit configured to determine satellite information included in the satellite navigation data based on down-converting the satellite navigation data, a terrestrial transmitter configured to transmit beacon signals, and a configuration circuit configured to configure the terrestrial transmitter based on the satellite information. The user device 1400 may, similar to the user device 1300 of Figure 13, further include a location determination circuit 1304 configured to determine a location of the user device based on the received beacon signal. The user device 1400 may further include a satellite receiver 1402, like will be described in more detail below. The user device 1400 may further include a control information receiver 1404, like will be described in more detail below. The terrestrial receiver 1302, the location determination circuit 1304, the satellite receiver 1402, and the control information receiver 1404 may be coupled with each other, for example via a connection 1406, for example an optical connection or an electrical connection, such as for example a cable or a computer bus or via any other suitable electrical connection to exchange electrical signals. It will be understood that although the terrestrial receiver 1302, the location determination circuit 1304, the satellite receiver 1402, and the control information receiver 1404 are illustrated in Figure 14 separately and are described separately, they may be provided in a single circuit, in which the connection 1406 may be a data connection.

The satellite receiver 1402 may be configured to receive satellite navigation data from a satellite (not shown in Figure 14).

The satellite receiver 1402 may be configured according to at least one of the following navigation standard: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The location determination circuit 1304 may further be configured to determine the location of the user device 1400 further based on the satellite navigation data.

The control information receiver 1404 may be configured to receive control information indicating a timing of the beacon signal. The control information receiver 1404 and the terrestrial receiver 1302 may be a single receiver (in other words: a common receiver).

The terrestrial receiver 1302 may be configured according to ultra wide band. The control information receiver 1404 may be configured according to ultra wide band.

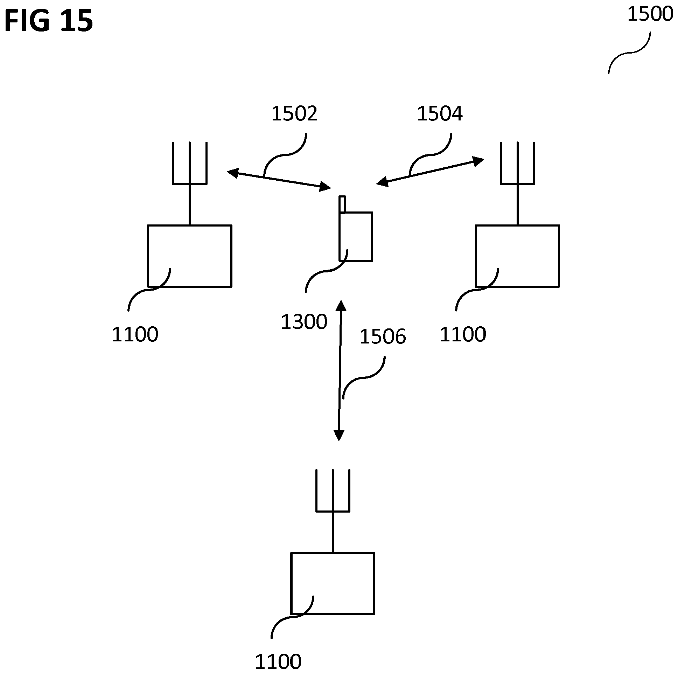

Figure 15 shows a location determination system 1500. The location determination system 1500 may include a plurality of radiobeacon stations 1100. In Figure 15, for example three radiobeacon stations 1100 are shown. It will be understood that each radiobeacon station 1100 may be identical or similar to a radiobeacon station as described with reference to Figure 11 or Figure 12 above. Each radiobeacon station may include: a satellite receiver configured to receive satellite navigation data from a satellite; a down-conversion circuit configured to determine satellite information included in the satellite navigation data based on down-converting the satellite navigation data; a terrestrial transmitter configured to transmit beacon signals (for example illustrated as arrows 1502, 1504, and 1506 in Figure 15); and a configuration circuit configured to configure the terrestrial transmitter based on the satellite information. The location determination system 1500 may further include a user device 1300. It will be understood that the user device 1300 may be similar or identical to a user device as described with reference to Figure 13 or Figure 14 above. The user device 1300 may include: a receiver configured to receive a beacon signals from the radiobeacon stations (for example receive a first beacon signal 1502 from a first radiobeacon station, a second beacon signal 1504 from a second radiobeacon station, and a third beacon signal 1506 from a third radiobeacon station); and a location determination circuit configured to determine a location of the user device based on the received beacon signals. It will be understood that more than one user device may be provided, and that each user device may receive beacon signals from the radiobeacon stations.

The plurality of radiobeacon stations 1100 may be configured to time-synchronize based on the satellite information.

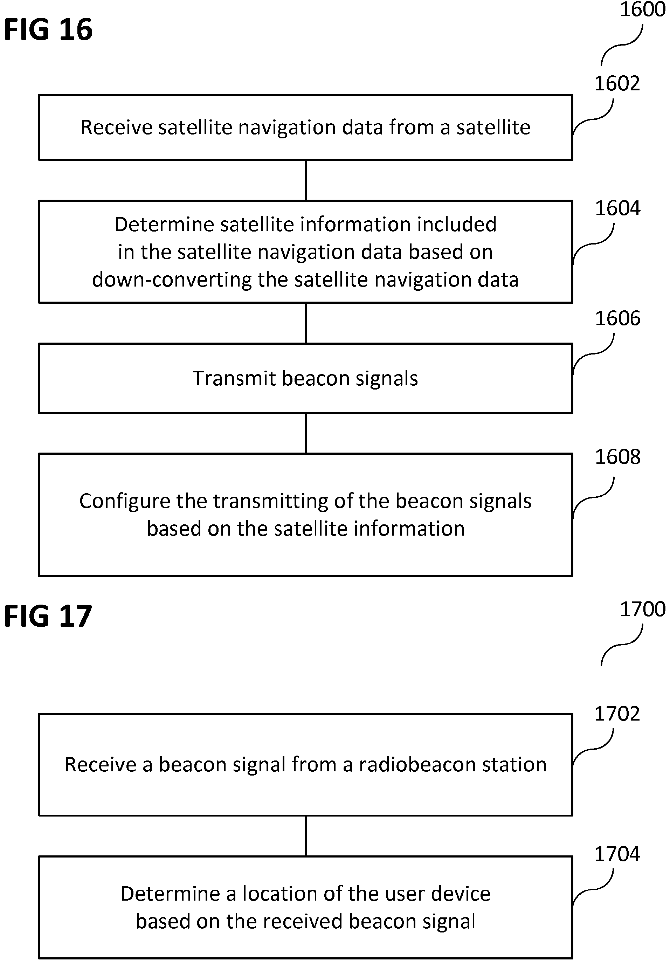

Figure 16 shows a flow diagram 1600 illustrating a method for controlling a radiobeacon station. In 1602, a satellite receiver of the radiobeacon station may receive satellite navigation data from a satellite. In 1604, a down-conversion circuit of the radiobeacon station may determine satellite information included in the satellite navigation data based on down-converting the satellite navigation data. In 1606, a terrestrial transmitter of the radiobeacon station may transmit beacon signals. In 1608, a configuration circuit of the radiobeacon station may configure the transmitting of the beacon signals based on the satellite navigation data.

Receiving the satellite navigation data may include or may be receiving the satellite navigation data according to a navigation standard. Transmitting the beacon signals may include or may be transmitting the beacon signals according to a communication standard different from the navigation standard.

The navigation standard may include or may be a navigation standard of the following navigation standards: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The communication standard may include or may be a communication standard of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard).

The method may further include configuring the terrestrial transmitter based on the satellite information to be time-synchronized to at least one further radiobeacon station.

The method may further include configuring the transmitting of the beacon signals to transmit the beacon signals at pre-determined timings, the pre-determined timings based on the satellite navigation data.

The method may further include configuring the transmitting of the beacon signals to transmit the beacon signals including a location information, wherein the location information may be based on the satellite navigation data.

The method may further include receiving a beacon signal from another radiobeacon station and transmitting a time of arrival of the beacon signal received from the other radiobeacon station.

The method may further include receiving control information and transmitting the beacon signals at pre-determined timings, the pre-determined timings based on the control information.

Figure 17 shows a flow diagram illustrating a method for controlling a user device. In 1702, a terrestrial receiver of the user device may receive a beacon signal from a radiobeacon station, wherein the radiobeacon station may include a satellite receiver configured to receive satellite navigation data from a satellite, a down-conversion circuit configured to determine satellite information included in the satellite navigation data based on down-converting the satellite navigation data, a terrestrial transmitter configured to transmit beacon signals, and a configuration circuit configured to configure the terrestrial transmitter based on the satellite information. In 1704, a location determination circuit of the user device may determine a location of the user device based on the received beacon signal.

Receiving the beacon signal may include or may be receiving the beacon signal according to at least one of the following communication standards: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard).

The method may further include receiving satellite navigation data from a satellite.

Receiving the satellite navigation data may include or may be receiving the satellite navigation data according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

The method may further include determining the location of the user device further based on the satellite navigation data.

The method may further include receiving control information indicating a timing of the beacon signal.

Receiving the beacon signal may include or may be receiving the beacon signal according to ultra wide band.

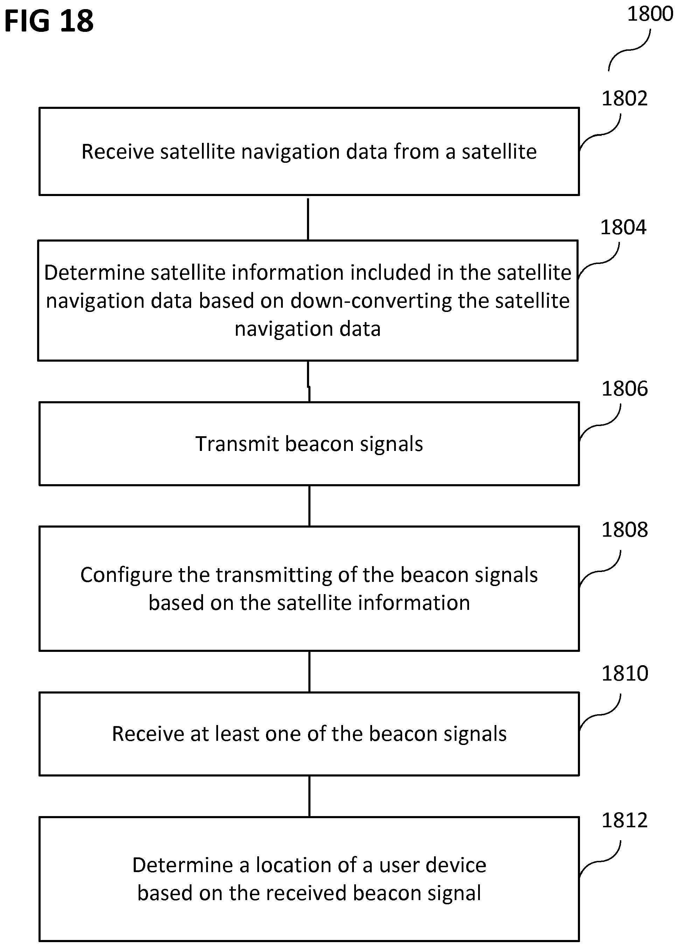

Figure 18 shows a flow diagram 1800 illustrating a location determination method. In 1802, radiobeacon stations may receive satellite navigation data from satellites. In 1804, the radiobeacon stations may determine satellite information included in the satellite navigation data based on down-converting the satellite navigation data. In 1806, the radiobeacon stations may transmit beacon signals. In 1808, the radiobeacon stations may configure the transmitting of the beacon signals based on the satellite information. In 1810, a user device may receive at least one of the beacon signals. In 1812, the user device may determine a location of a user device based on the received beacon signal.

The location determination method may further include time-synchronizing the transmitting of the beacon signals based on the satellite information.

According to one aspect of this disclosure, a positioning system may be provided.

According to one aspect of this disclosure, there is provided a reference station (which may also be referred to as a radiobeacon station) for a positioning system, the reference station including: a GNSS receiver for determining a position of the reference station; a transmitter for transmitting ranging signals for detection by a user device; and a communication module for communicating with a control unit, wherein the reference station is configured such that the transmitter is controlled to transmit said ranging signals with a known time relationship to a time reference of the GNSS system.

The reference station may be configured to receive control information from the control unit, wherein the control unit specifies a repeating time at which the reference station should transmit said ranging signals.

The reference station may be configured to receive ranging signals transmitted by another reference station. In that case, the reference may be configured to transmit times of arrival of said received ranging signals to the control unit.

The reference station may be configured to transmit its GNSS measurements to the control unit.

The reference station may be configured to make GNSS measurements to update its determined position during use.

According to another aspect of the invention, there is provided a positioning system including a plurality of said reference stations and a control unit.

The control unit may set a respective different time slot for each reference station to transmit said signals for detection by a user device.

According to another aspect of this disclosure, there is provided a control unit for receiving GNSS measurements from a plurality of reference stations in a positioning system, and to inform the reference stations of respective time slots in which they should transmit ranging signals.

The control unit may be configured to inform user devices of the locations of the reference stations, and of respective time slots in which the reference stations transmit their ranging signals.

According to another aspect of this disclosure, there is provided a user device, for receiving from a control unit information relating to locations of a plurality of reference stations, and relating to respective time slots in which the reference stations transmit their ranging signals, the user device including a receiver for receiving the ranging signals and being adapted to determine a location of the (user) device based on the received information and the received ranging signals.

The user device may also include a GNSS receiver for determining a position of the user device. In that case, the user device is adapted to determine the location of the device based on the received information and the received ranging signals, and based on GNSS measurements.

According to various aspects of this disclosure, a system may include a circuit for combining GNSS technology with pulsed terrestrial ranging technology (based, for example, on Ultrasonic or UWB techniques) in such a way as to create a combined indoor positioning and navigation system which has at least some of the characteristics that it:
- Can quickly and easily be installed and brought live;
- Provides seamless positioning between outdoor and indoor environments;
- Does not require cabling between the ranging reference stations;
- Does not require any specific calibration activity;
- Has no limitations on the number of users;
- Minimizes the potential for interference between and within the terrestrial and GNSS components; and
- Enables the user to determine their own locations directly, rather than their locations being computed remotely.

In one example, it may be the reference stations which transmit the ranging signals and the users which make measurements on them.

The system as a whole may be considered as consisting of three segments, namely the Reference Station Segment, Control Segment, and User Segment. In an example, the Reference Station Segment consists of a number of units at fixed locations, which may be capable of making GNSS measurements, transmitting terrestrial ranging signals, and measuring the time-of-arrival of ranging signals transmitted by the other reference stations. The User Segment consists of any number of mobile users, each equipped with a means of making GNSS measurements and of measuring the time-of-arrival of the ranging signals transmitted by the reference stations. For example, each user, then, may be thought of as being a simplified, mobile version of the reference stations.

In an example, the system may determine time and position from GNSS in weak signal environments. Being able to make such determinations enables the reference stations to generate the ranging pulses (which may also be referred to as beacon signals) synchronized to a common time-reference (e.g., GPS time) even in indoor locations and without the need for any physical connections between them.

In an example, the system as a whole uses a form of Time-Division Multiple Access (TDMA), so that the user segment can identify which reference station transmitted any particular pulse simply by determining the time-of-arrival of the pulse. This means that the terrestrial ranging component of the system can be as simple as possible. It also means that the potential for interference caused by the terrestrial ranging system can be minimized.

The Control Segment may allocate to each reference station a unique time-slot within a repeat interval at which to transmit ranging pulses, where each time slot is an integer number of milliseconds. This may be called the burst time plan or pulse time plan. For example, for a system with five reference stations and a ranging interval of 1 second, the five reference stations might transmit ranging signals at the following precise times:

| | | | | | | |
|---|---|---|---|---|---|---|
| Unit 1: | T0 | T0+1.000 | T0+2.000 | T0+3.000 | ... | seconds |
| Unit 2: | T0+0.200 | T0+1.200 | T0+2.200 | T0+3.200 | ... | seconds |
| Unit 3: | T0+0.400 | T0+1.400 | T0+2.400 | T0+3.400 | ... | seconds |
| Unit 4: | T0+0.600 | T0+1.600 | T0+2.600 | T0+3.600 | ... | seconds |
| Unit 5: | T0+0.800 | T0+1.800 | T0+2.800 | T0+3.800 | ... | seconds |

It is to be noted that it is not strictly necessary for the time-slots to be all integer milliseconds, but it will be apparent to anyone familiar with GPS technology that there are benefits from designing the system in this way.

Before the system is fully operational each reference station may continually make GNSS measurements on the signals it receives (for example at 1 Hz), and transmit these measurements to the Control Segment. Usually, each reference station would also compute its own Position and Time (PT) solution (if possible) from these measurements, but this is not strictly necessary.

The Control Segment may use these measurements to compute a PT solution for as many reference stations as it can, and transmit the solution for each reference station to that reference station in one form or another.

Once a reference station has a sufficiently accurate knowledge of time, it may start transmitting ranging pulses in its allocated time-slot, and may also start making time-of-arrival measurements on pulses received from any other reference stations. These time-of-arrival measurements are also provided to the Control Segment, where all the measurements (i.e., both GNSS and terrestrial ranging) from all the reference stations may be combined, to produce a coherent and consistent set of PT solutions for all the reference stations. The GNSS and terrestrial ranging measurements may for example be combined using a form of sequential estimation in a manner often described as tightly coupled. It will be apparent to anyone familiar with navigation or positioning systems that the accuracy of the PT solutions will improve over time, as more measurements become available and are used.

Once the Control Segment has a sufficiently accurate PT solution for each reference station, or for a sufficiently large sub-set of the reference stations, the system can be thought of as being operational. Note, however, that even once operational the Control Segment can, and usually will, continually improve the PT solutions and hence the overall accuracy of the system.

The Control Segment may make available to the User Segment the details of the pulse time plan for the reference stations, together with the current best estimate of the locations of all the reference stations.

Each user may make GNSS measurements in the usual way in order to determine an initial estimate of its position and time. Once it has determined, or otherwise obtained, time sufficiently accurately, it will be able also to make time-of-arrival measurements on any terrestrial ranging pulses it sees. In the example using a TDMA nature of the system, and by making use of the information made available by the Control Segment, each user will be able to determine which reference station transmitted which signal and hence will be able to combine the GNSS measurements with the terrestrial ranging measurements in order to compute an improved estimate of position and time. It would usually be expected that the measurements would be combined together, and the PT solution computed, using an Extended Kalman Filter (EKF), or similar algorithm. However, various alternatives exist to the EKF. The measurements may be combined in a tightly coupled method, taking benefit of the fact that the reference station time-base is synchronized to one or more of the GNSS systems.

It is also to be noted that one, optional, aspect of the system can provide a significant advantage to a user of the system who starts attempting to determine their position while indoors. This is that, the terrestrial ranging pulses may be at RF and would be transmitted on integer-millisecond boundaries. At RF, the speed of transmission is 3x10⁸ m/s. That is, even for a separation between user and reference station of 300 meters (which would be large for an indoor location system) the time-of-flight would be 1 µs. Consequently, as soon as the user equipment receives a ranging pulse it will know time, modulo 1 ms, to an accuracy of better than 1 µs, even though it won't necessarily know which reference station transmitted the pulse. It will also know its position to an accuracy of a few hundred meters at worst. Furthermore, one second later it will be able to generate an accurate estimate of frequency. It will be apparent to anyone familiar with GPS technology that this is an extremely advantageous situation with regards the fast acquisition of satellite signals and is hence an extremely advantageous situation with regards fast time-to-first-fix.

With a ranging system using RF signals an exemplary configuration may be for each station to transmit pulses at 1 Hz, with 50 ms time slots. That is, up to 20 reference stations could be accommodated in such a system with no danger of there being any ambiguity as to which reference station was transmitting any particular pulse, provided that the receiver had a sufficiently accurate knowledge of time.

With a ranging system using ultrasonic signals the speed of transmission is 340 m/s. For such a system, an exemplary configuration may be for each station to transmit pulses at 0.5 Hz, with 250 ms time slots. That is, up to 8 reference stations could be accommodated in such a system.

As described above, one example system as a whole can be considered as consisting of three segments, namely the Reference Station Segment, Control Segment, and User Segment.

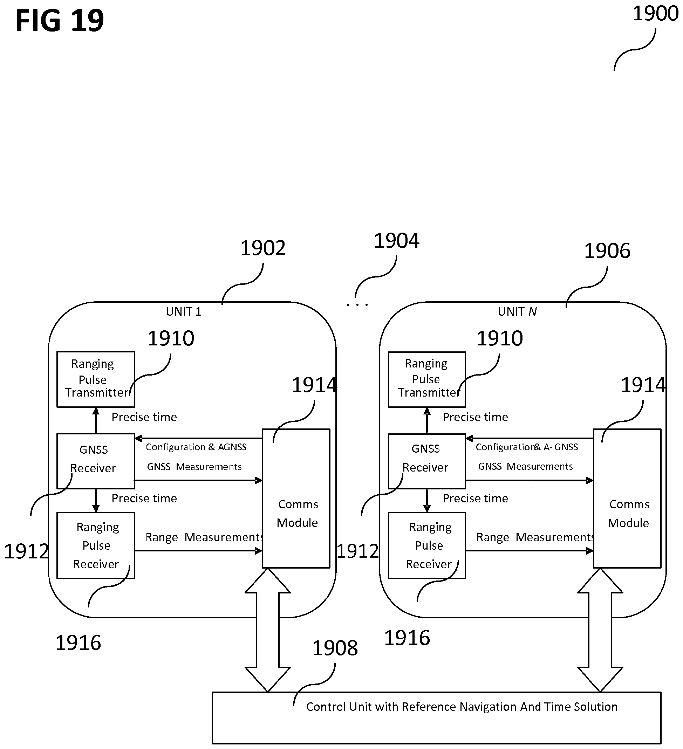

Figure 19 shows an illustrating of a reference station segment 1900.

The *Reference Station Segment* consists of a number of reference stations, two of which are illustrated as 1902 and 1906 in Figure 19. It will be understood that any number of reference stations may be provided, for example further reference stations besides 1902 and 1906 may be provided, like indicated by dots 1904.. The reference stations may be provided at (at least temporarily) fixed locations situated around and within the area to be served. For three-dimensional positioning these references stations will be located at different altitudes. Each reference station may include: a GNSS receiver 1912; a pulsed terrestrial ranging transmitter 1910; a pulsed terrestrial ranging receiver 1916; and a communications link (either wired or wireless) to the Control Segment 1908 by means of a communications module 1914; and processing and storage capability (not shown in Figure 1).

The locations of one or more of these reference stations 1902, 1904, 1906 may be known, either fully or partially, a priori. For example, the three-dimensional coordinates of one or more stations may be known from an earlier survey. Or the altitude of one or more stations may be known. Or the difference in altitude between pairs of stations (determined, for example, from the measurement of the difference in atmospheric pressure) may be known. Or the distance between pairs of stations may be known. Any such knowledge may be provided to the control segment 1908. Alternatively, however, the system can operate without any such a priori knowledge.

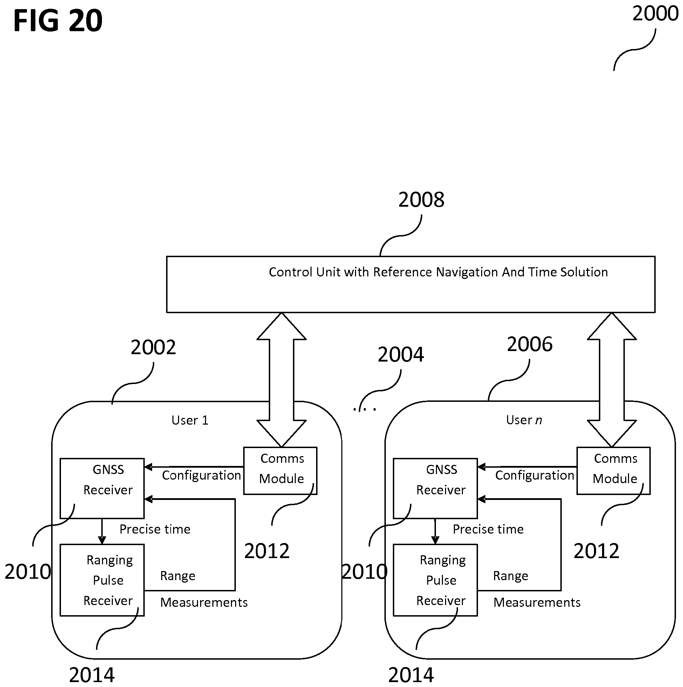

Figure 20 shows an illustration of a user segment 2000.

The User Segment may include any number of mobile receivers 2002, 2004, 2006, whose locations are to be determined at various times. The mobile receivers 2002, 2004, 2006 may be provided for example in smart phones, tablet or notebook computers, or any other suitable device. The general operation of such devices may be conventional, and so only those components of the mobile receivers 2002, 2004, 2006 involved in location will be described here.

Each mobile receiver 2002, 2004, 2005 may include: a GNSS receiver 2010; a pulsed terrestrial ranging receiver 2014; a wireless communications link to the Control Segment 2008 (which may be similar or identical to the control segment 1908 of Figure 19) by means of a communications module 2012; and processing and storage capability (not shown in Figure 20).

The Control Segment 2008 may for example consist of a single entity, with the main components being: a communications link to each reference station in the Reference Station Segment (either wired or wireless); a wireless communications link to each mobile receiver (i.e., to each user); and processing and storage capability.

The control segment may optionally have a portion of acquiring GNSS ephemeris data. This can be either a standard source of A-GNSS data, or a link to one or more nearby GNSS receivers with access to signals sufficiently strong to be able to decode its own ephemeris data, where these receivers could be part of one or more of the reference stations.

The control segment need not be on-site, and need have no physical connection to any of the reference stations.

After installation, each reference station may undergo an automatic initialization phase before entering an operational phase. This distinction may not strictly be necessary but it aids understanding of the operation of the system. For example, the initialization phase for a reference station consists of the following steps. However, in some cases some of these steps could be omitted or combined.
- Receive configuration data from the Control Segment. This configuration data includes a definition of the interval between ranging pulses and a time-slot within the interval at which to transmit the ranging pulses.
- Receive standard GNSS Assistance (A-GNSS) data from the Control Segment (or other source). This may include ephemeris data and/ or approximate position and time information.

A position and time (PT) solution may then be determined, and may be updated and improved as more GNSS measurements become available. In order to obtain an accurate PT solution even when the reference station is in a location with weak signal reception for example because there is no clear view of the sky, as when the reference station is indoors a combination of standard GNSS techniques and an enhanced timing method is used. The enhanced timing method may for operate with data from multiple receivers rather than from a single receiver.

For example, a time reference system for generating a time reference from signals produced by a global navigation satellite constellation may include: a satellite signal receiver having a radio frequency stage for receiving and down-converting code-modulated signals from a plurality of satellites and a correlate to receive, track and decode the down-converted satellite signals to provide signals containing partial pseudo-range measurements for respective satellites; and a data processing arrangement configured to receive signals containing assistance data from a source other than the received and down-converted satellite signals and the signals containing partial pseudo-range measurements, to perform data-bit synchronization in which the bit edges of a low frequency data bit stream carried by the received satellite signals are identified, to perform correlation of pre-selected data sequences in the low frequency data stream to resolve time ambiguities, and to compute a time reference signal based on the assistance data, the partial pseudo-range measurements and code-tracking outputs from the satellite signal receiver, the data-bit synchronization and the data sequence correlation.

For example, the assistance data contains satellite ephemeris and/or almanac information which may be fed into the data processing arrangement from, for instance, a telecommunications network, the assistance data having been generated elsewhere using a remote satellite signal receiver in a strong signal environment.

The system may include a frequency-locked loop contained at least partly in the satellite signal receiver and operable to generate a Doppler shift signal indicative of Doppler shifts caused by satellite motion, wherein the data processing arrangement of the system is configured to modify the data-bit synchronization in response to the Doppler shift signal. Thus, to compensate for any frequency offsets, a feedback loop is employed, for example in the data processing arrangement, to improve the accuracy of data-bit synchronization.

The data processing arrangement may be configured to provide a preliminary time solution, for example with a time uncertainty equal to the duration of between 1 and 5 data-bits of a low frequency data stream, using a position-velocity-time estimate produced from the partial pseudo-range measurements and, for example, Doppler measurements. Ambiguity resolution algorithms may be used to provide a best-fit for the measurements and the assistance data. Intermediate ambiguity resolution and time solution adjustment may be performed using the results of the data-bit synchronization and the correlation of pre-selected data sequences from the signals received from a selected one of the satellites from which the receiver receives signals. Further adjustment of the time solution may be performed in response to the code tracking output to produce the time reference signal.

The pre-selected data sequences may embody a repeated data pattern. In the case of GPS, the data-bit preamble sequence in the low-frequency data stream is one such pattern. In such a case, the processor arrangement is configured such that a correlation of the data sequence includes correlation of a signal with the expected data pattern over successive instances of the repeated data pattern in the data stream in the signal received from at least one of the satellites from which signals are received by the receiver. Alternatively, the data sequences are selected on the fly. In other words, the selection may be a dynamic process occurring in real time. Such selection may make use of the assistance data or may be performed by a prediction process based on previously received data sequences, or based on the assistance data. The processing arrangement may be configured in such cases to perform auto-correlation of the data patterns of potential data sequences, selection being based on the quality of the auto-correlation maximum compared to average or secondary values. In either case, the correlation of incoming data in the data stream may be performed by a combination of coherent integration and incoherent integration.

For example, when a frequency-locked loop is used to refine the data-bit synchronization, a preliminary PVT solution (wherein PVT stands for position, velocity and time; if the receiver is known to be stationary, then the PVT solution reduces to the PT solution) is provided having a time accuracy no better than +/-11 ms (for example no better than +/-15 ms), the solution being in the form of a plurality of pseudo-range time solution options, one of which is accurate to within better than +/-3 ms. Correlation to identify the most accurate time solution option may include correlation of the pre-selected data sequences using coherent integration over intervals no longer than the reciprocal of the frequency stability of the frequency-locked loop. The selection of the most accurate time solution option may include incoherent integration of the results of the above coherent integration over a longer interval. In conditions in which frequency stability of the frequency-locked loop is poor, a repeated data sequence shorter than the GPS preamble may be used. Alternatively, a differentially demodulated correlation may be used, whereby the pattern to be matched is not the navigation data, but the differential-demodulation of successive bits of the data stream, in which case longer data bit sequences (than the reciprocal of the frequency stability) may be used.

If non-repetitive data sequences are used, pre-selection includes a determination of the suitability of sequences for correlation (i.e. avoiding sequences in which, within the respective sequence, the data value does not change or sequences involving, e.g., simple alternation of the data value between high and low values within the respective sequence).

A data sequence or sequences of 16 bits or less are used for pattern matching, with 8-bit or shorter sequences being used.

The reference segment may transmit the GNSS measurements (in one of many available forms) to the Control Segment as they become available (for example at 1 Hz).

The reference segment may also transmit its PT solution to the Control Segment as it is updated (for example at 1 Hz).

In other words, this initialization phase may involve each reference station determining and maintaining its own PT solution, with this solution being provided to the control segment together with the GNSS data from which the position and time solution was computed. Once its position and time solution has been determined to a sufficient level of accuracy the reference station will enter the operational phase, which may include some or all of the following steps:
- Continue receiving assistance data from the Control Segment (or other source).
- Whenever provided, receive position and time corrections from the Control Segment and apply these as a form of calibration constants to its internally-derived position and time solution.
- Continue acquiring, tracking and making measurements on the GNSS signals.
- Continue to transmit the GNSS measurements (in one of many available forms) to the Control Segment as they become available (for example once per second).
- Optionally, make use of the GNSS measurements to update its position and time solution.
- Making use of its (corrected) time solution, transmit the pulsed ranging signal at the interval and time-slot defined by the Control Segment.
- Making use of its (corrected) time solution, measure the time-of-arrival of any ranging signals transmitted by any of the other reference stations.
- Transmit the measured time-of-arrival of any of the ranging signals received to the Control Segment as they become available.
- Transmit its PT solution to the Control Segment as it is updated (for example at 1 Hz).

Thus, for example, the reference stations may be synchronized, or partially synchronized, in time by making use of GNSS signals even in indoor locations. This may be possible if a method is used for generating a precise time reference from GNSS signals in weak signal environments, such as indoor locations.

This may provide a method for synchronizing, or partially synchronizing. The reference stations and also results in the reference stations being synchronized to a GNSS time reference, which significantly increases the potential benefits of combining the terrestrial ranging measurements and the GNSS measurements together.

The behavior of the control segment with respect to the reference segment may include some or all of the following steps:
- Obtain GNSS ephemeris data or other form of assistance data either from a standard source of A-GNSS data, or from a link to one or more nearby GNSS receivers with access to signals sufficiently strong to be able to decode their own ephemeris data. These receivers may be part of one or more of the reference stations.
- Continually provide the assistance data to each of the reference stations.
- Continually receive GNSS and terrestrial ranging measurements from each of the reference stations and combine all measurements, together with any other position-related information it has available about the reference stations, in a single estimation process to produce a coherent, consistent set of PT solutions for the complete set of reference stations.
- Transmit to each reference station the PT solution for that reference station in one of a number of possible forms.

In other words, during the operational phase, each reference receiver may transmit ranging pulses according to the pulse time plan provided by the control segment, and make time-of-arrival measurements on the ranging pulses transmitted by the other reference stations. This is in addition to continually making GNSS measurements. All these measurements are provided to the control segment. The reference station also applies corrections to its own position and time solution, where these corrections have been provided by the control segment. That is, each reference station uses a PT solution which, in one way or another, has been provided by the Control Segment, with the Control Segment being responsible for making sure that the PT solution for each reference station is the best possible, and that each solution is consistent with all the others. The Control Segment achieves this by combining all the GNSS and terrestrial ranging measurements together in one single, sequential, tightly-coupled, estimation process.

Each mobile receiver may also be thought of as undergoing an automatic initialization phase followed by an operational phase. (Again, this distinction is not strictly necessary but it aids understanding of the operation of the system.)

The initialization phase for a mobile receiver may include some or all of the following steps:
- As the receiver approaches the area being served, or when the receiver is brought live, it receives configuration data from the Control Segment. This includes a definition of the interval between ranging pulses, and the coordinates and ranging time-slot of each reference station.
- Receive (optionally) standard GNSS Assistance (A-GNSS) data from the Control Segment.
- Acquire and track GNSS signals, and determine an internal time solution sufficiently accurate to be able to differentiate in time between the different reference stations. For example, if the pulse time plan is such that the reference stations transmit pulses separated from each other by 20 ms, then once the mobile receiver has determined time to an accuracy slightly better than 10 ms it will be able to differentiate between the different reference stations.

The operational phase for a mobile receiver may include continually repeating some or all of the following steps:
- Receive (optionally) A-GNSS data from the Control Segment, or from elsewhere.
- Periodically receive any updates to the configuration data, including updated coordinates of the reference stations.
- Continue acquiring, tracking and making measurements on the GNSS signals.
- Making use of its time solution, measure the time-of-arrival of any ranging signals transmitted by any of the reference stations. The identity of the reference station which transmitted any particular pulse can be determined from the knowledge of the time and of the time-slots for all the reference stations.
- Combine the GNSS measurements and the (synchronized) terrestrial ranging measurements to compute an updated position and time solution. It would usually be expected that the measurements would be combined together, and the PT solution computed, using an Extended Kalman Filter (EKF), or similar algorithm. However, various alternatives exist to the EKF. The measurements may be combined using a tightly coupled method, taking benefit of the fact that the reference station time-base is synchronized to one or more of the GNSS systems.

It should be clear to anyone familiar with navigation and location systems that the system as described above is such that all the information available can be combined together in an optimum way, and that the system allows for the best possible accuracy for the user when the user is in any form of transition zone between one area which is well-served by the GNSS and another which is well-served by the terrestrial system.

There may also be a number of optional additional aspects to the system, as described below.

The accuracy of the self-calibration of the system will be improved by including one or more reference stations in an area where there are more likely to be direct lines-of-sight to some of the GNSS satellites (i.e., outdoors). However, these reference stations need not be permanent. That is, they could be installed for no more than a few minutes or tens of minutes. Furthermore, such temporary reference stations could be moved around - that is, there could be one or more 'roving, temporary' reference stations, which remain at a fixed location for just a short period of time before being moved to another fixed location for another a short period of time, etc.

Rather than, or in addition to, the above concept of temporary reference stations the accuracy of the self-calibration of the system could also be improved by using one or more of the user segment units during the early stages of calibration, where such units also transmit their GNSS and terrestrial ranging measurements to the Control Segment. That is, these units would essentially be temporary, simplified dynamic reference stations.

The accuracy of the self-calibration of the system will also be improved if the Control Segment has information about the location, or difference in location, of one or more of the reference stations. For example, the three-dimensional coordinates of one or more of the stations may be known from an earlier survey. Or the altitude of one or more of the stations may be known. Or the difference in altitude between pairs of stations (determined, for example, from the measurement of the difference in atmospheric pressure) may be known. Or the distance between pairs of stations may be known. All such information can be used by the Control Segment in order to improve the accuracy of the calibration of the system.

The possibility of the terrestrial ranging equipment causing interference to the GNSS equipment can be removed by 'blanking' the GNSS data measurements during the known periods of transmission of the ranging pulses.

The user segment units (which include the 'temporary, simplified dynamic reference stations') may also include sensors such as accelerometers, magnetometers, gyroscopes and pressure sensors. Data from such sensors can be used to augment the GNSS and terrestrial ranging measurements to provide improved navigation and location performance.

Compared to other systems which combine GNSS and terrestrial ranging components, the system according to various aspects of this disclosure may have at least one of the following advantages:
- The system can be installed and brought live more quickly and easily, and at less expense.
- The system provides seamless positioning between outdoor and indoor environments.
- The system does not require cabling between the ranging reference stations.
- The system does not require any specific calibration activity.
- The system has no limitations on the number of users.
- The potential for interference between and within the terrestrial and GNSS components is minimized, for two reasons. Firstly, because the time-of-transmission of the terrestrial pulses are known beforehand, the GNSS component can blank-out its measurements during the transmission periods. Secondly, because the reference stations use TDMA there is no need for different transmitters to use different pulse characteristics - for example, for a UWB system there is no need for different transmitters to use different pseudorandom codes. This makes it easier to design the system such that potential interference is minimized.
- Each user determines their own location directly, rather than the user locations being computed remotely and having to be transmitted.
- The terrestrial receivers and transmitters are simplified, because each transmitter can transmit the same pulse form.
- The time to acquire GNSS signals indoors can be reduced significantly, and hence the time to generate a first fix can be reduced significantly.

One benefit of the devices and methods according to various aspects of this disclosure is that they combine existing technology and systems in such a way as to produce an overall system which is better than the sum of its parts. Another system discussed above is an example of a system that could benefit from being used as part of the system discussed in this document. The devices and methods are not limited to being used with this system in particular, nor with UWB systems in general. Rather, they are designed for use with any pulsed, or intermittent, ranging system.

The following examples pertain to further embodiments.

Example 1 is a radiobeacon station comprising: a satellite receiver configured to receive satellite navigation data from a satellite; a timing circuit configured to determine a timing scheme based on the satellite navigation data; and a terrestrial transmitter configured to transmit a plurality of beacon signals based on (for example in accordance with) the determined timing scheme.

In example 2, the subject-matter of example 1 can optionally include a down-conversion circuit configured to determine satellite information included in the satellite navigation data based on down-converting the satellite navigation data, and that the timing circuit is further configured to determine the timing scheme based on the satellite information.

In example 3, the subject-matter of any one of examples 1 to 2 can optionally include that the satellite receiver is configured to receive satellite navigation data according to a navigation standard, and that the terrestrial transmitter is configured to transmit the beacon signals according to a communication standard different from the navigation standard.

In example 4, the subject-matter of any example 3 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 5, the subject-matter of any one of examples 3 to 4 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 6, the subject-matter of any one of examples 1 to 5 can optionally include that the terrestrial transmitter is further configured to transmit the plurality of beacon signals including a location information, the location information based on the satellite navigation data.

In example 7, the subject-matter of any one of examples 1 to 6 can optionally include a terrestrial receiver configured to receive a beacon signal from another radiobeacon station, and that the terrestrial transmitter is further configured to transmit a time of arrival of the beacon signal received from the other radiobeacon station.

In example 8, the subject-matter of any one of examples 1 to 7 can optionally include a control information receiver configured to receive control information, and that the timing circuit is further configured to determine the timing scheme based on the control information.

Example 9 is a user device comprising: a beacon signal receiver configured to receive a beacon signal from a radiobeacon station, the radiobeacon station comprising a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme; and a location determination circuit configured to determine information indicating a location of the user device based on the received beacon signal.

In example 10, the subject-matter of example 9 can optionally include that the location determination circuit is further configured to determine the information indicating the location of the user device based on at least one of a time of arrival of the beacon signal or an angle of arrival of the beacon signal.

In example 11, the subject-matter of any one of examples 9 to 10 can optionally include that the beacon signal receiver is configured according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 12, the subject-matter of any one of examples 9 to 11 can optionally include a satellite receiver configured to receive satellite navigation data from a satellite.

In example 13, the subject-matter of example 12 can optionally include that the satellite receiver is configured according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 14, the subject-matter of any one of examples 12 to 13 can optionally include that the location determination circuit is further configured to determine the location of the user device further based on the satellite navigation data.

In example 15, the subject-matter of any one of examples 9 to 14 can optionally include a control information receiver configured to receive control information indicating a timing of the beacon signal.

Example 16 is a location determination system comprising: a plurality of radiobeacon stations, each radiobeacon station comprising: a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme; and a user device comprising: a beacon signal receiver configured to receive a beacon signal from a radiobeacon station; and a location determination circuit configured to determine information indicating a location of the user device based on the received beacon signal.

In example 17, the subject-matter of example 16 can optionally include that the plurality of radiobeacon stations are configured to time-synchronize based on the satellite information.

Example 18 is a location determination system comprising: a radiobeacon station comprising a satellite receiver configured to receive satellite navigation data from a plurality of satellites, a location determination circuit configured to determine information indicating a location of the radiobeacon station based on the satellite navigation data received from the plurality of satellites, and a terrestrial transmitter configured to transmit a plurality of beacon signals, each beacon signal comprising the determined information indicating the location of the radiobeacon station; and a user device comprising a beacon signal receiver configured to receive a beacon signal from the radiobeacon station, and a location determination circuit configured to determine information indicating a location of the user device based on at least one of a time of arrival of the beacon signal or an angle of arrival of the beacon signal.

In example 19, the subject-matter of example 18 can optionally include that the radiobeacon station further comprises a down-conversion circuit configured to determine satellite information included in the satellite navigation data based on down-converting the satellite navigation data, and that the location determination circuit is further configured to determine the information indicating the location of the radiobeacon station based on the satellite information.

In example 20, the subject-matter of any one of examples 18 to 19 can optionally include that the satellite receiver of the radiobeacon station is configured to receive satellite navigation data according to a navigation standard, and that the terrestrial transmitter of the radiobeacon station is configured to transmit the beacon signals according to a communication standard different from the navigation standard.

In example 21, the subject-matter of example 20 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 22, the subject-matter of any one of examples 20 to 21 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 23, the subject-matter of any one of examples 18 to 22 can optionally include that the radiobeacon station further comprises a timing circuit configured to determine a timing scheme based on the satellite navigation data, and that the terrestrial transmitter is further configured to transmit the plurality of beacon signals based on (for example in accordance with) the determined timing scheme.

In example 24, the subject-matter of any one of examples 18 to 23 can optionally include that the radiobeacon station further comprises a terrestrial receiver configured to receive a beacon signal from another radiobeacon station, and that the terrestrial transmitter is further configured to transmit a time of arrival of the beacon signal received from the other radiobeacon station.

In example 25, the subject-matter of any one of examples 18 to 24 can optionally include that the radiobeacon station further comprises a control information receiver configured to receive control information, and that the timing circuit is further configured to determine the timing scheme based on the control information.

In example 26, the subject-matter of any one of examples 18 to 25 can optionally include that the beacon signal receiver of the user device is configured according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 27, the subject-matter of any one of examples 18 to 26 can optionally include that the user device further comprises a satellite receiver configured to receive satellite navigation data from a satellite.

In example 28, the subject-matter of example 27 can optionally include that the satellite receiver of the user device is configured according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 29, the subject-matter of any one of examples 27 to 28 can optionally include that the location determination circuit of the user device is further configured to determine the location of the user device further based on the satellite navigation data.

In example 30, the subject-matter of any one of examples 18 to 29 can optionally include that the user device further comprises a control information receiver configured to receive control information indicating a timing of the beacon signal.

Example 31 is a method for controlling a radiobeacon station, the method comprising: receiving satellite navigation data from a satellite; determining a timing scheme based on the satellite navigation data; and transmitting a plurality of beacon signals based on (for example in accordance with) the determined timing scheme.

In example 32, the subject-matter of example 31 can optionally include determining satellite information included in the satellite navigation data based on down-converting the satellite navigation data, and determining the timing scheme based on the satellite information.

In example 33, the subject-matter of any one of examples 31 to 32 can optionally include receiving satellite navigation data according to a navigation standard, and transmitting the beacon signals according to a communication standard different from the navigation standard.

In example 34, the subject-matter of example 33 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 35, the subject-matter of any one of examples 33 to 34 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 36, the subject-matter of any one of examples 31 to 35 can optionally include transmitting the plurality of beacon signals including a location information, the location information based on the satellite navigation data.

In example 37, the subject-matter of any one of examples 31 to 36 can optionally include receiving a beacon signal from another radiobeacon station, and transmitting a time of arrival of the beacon signal received from the other radiobeacon station.

In example 38, the subject-matter of any one of examples 31 to 37 can optionally include receiving control information, and determining the timing scheme based on the control information.

Example 39 is a method for controlling a user device, the method comprising: receiving a beacon signal from a radiobeacon station, the radiobeacon station comprising a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme; and determining information indicating a location of the user device based on the received beacon signal.

In example 40, the subject-matter of example 39 can optionally include determining the information indicating the location of the user device based on at least one of a time of arrival of the beacon signal or an angle of arrival of the beacon signal.

In example 41, the subject-matter of any one of examples 39 to 40 can optionally include receiving the beacon signal according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 42, the subject-matter of any one of examples 39 to 41 can optionally include receiving satellite navigation data from a satellite.

In example 43, the subject-matter of example 42 can optionally include receiving the satellite navigation data according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 44, the subject-matter of any one of examples 42 to 43 can optionally include determining the location of the user device further based on the satellite navigation data.

In example 45, the subject-matter of any one of examples 39 to 44 can optionally include receiving control information indicating a timing of the beacon signal.

Example 46 is a location determination method comprising: receiving satellite navigation data from a satellite in a plurality of radiobeacon stations; determining a timing scheme based on the satellite navigation data; transmitting a plurality of beacon signals based on (for example in accordance with) the determined timing scheme; receiving a beacon signal in a user device; and determining information indicating a location of the user device based on the received beacon signal.

In example 47, the subject-matter of example 46 can optionally include that the plurality of radiobeacon stations are configured to time-synchronize based on the satellite information.

Example 48 is a location determination method comprising: receiving satellite navigation data from a plurality of satellites in a radiobeacon station; determining information indicating a location of the radiobeacon station based on the satellite navigation data received from the plurality of satellites; transmitting a plurality of beacon signals from the radiobeacon station, each beacon signal comprising the determined information indicating the location of the radiobeacon station; receiving a beacon signal from the radiobeacon station in a user device; and determining information indicating a location of the user device based on at least one of a time of arrival of the beacon signal or an angle of arrival of the beacon signal.

In example 49, the subject-matter of example 48 can optionally include determining in the radiobeacon station satellite information included in the satellite navigation data based on down-converting the satellite navigation data, and determining the information indicating the location of the radiobeacon station based on the satellite information.

In example 50, the subject-matter of any one of examples 48 to 49 can optionally include receiving satellite navigation data in the radiobeacon station according to a navigation standard, and transmitting the beacon signals from the radiobeacon station according to a communication standard different from the navigation standard.

In example 51, the subject-matter of example 50 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 52, the subject-matter of any one of examples 50 to 51 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 53, the subject-matter of any one of examples 48 to 52 can optionally include determining a timing scheme based on the satellite navigation data, and transmitting the plurality of beacon signals based on (for example in accordance with) the determined timing scheme.

In example 54, the subject-matter of any one of examples 48 to 53 can optionally include receiving a beacon signal from another radiobeacon station in the radiobeacon station, and transmitting a time of arrival of the beacon signal received from the other radiobeacon station from the radiobeacon station.

In example 55, the subject-matter of any one of examples 48 to 54 can optionally include receiving control information in the radiobeacon station, and determining the timing scheme based on the control information.

In example 56, the subject-matter of any one of examples 48 to 55 can optionally include receiving the beacon signal according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 57, the subject-matter of any one of examples 48 to 56 can optionally include receiving satellite navigation data from a satellite in a user device.

In example 58, the subject-matter of example 57 can optionally include receiving the satellite navigation data from the satellite in the user device according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 59, the subject-matter of any one of examples 57 to 58 can optionally include determining the location of the user device further based on the satellite navigation data.

In example 60, the subject-matter of any one of examples 48 to 59 can optionally include receiving in the user device control information indicating a timing of the beacon signal.

Example 61 is a radiobeacon station comprising: a satellite receiver means for receiving satellite navigation data from a satellite; a timing means for determining a timing scheme based on the satellite navigation data; and a terrestrial transmitter means for transmitting a plurality of beacon signals based on (for example in accordance with) the determined timing scheme.

In example 62, the subject-matter of example 61 can optionally include a down-conversion means for determining satellite information included in the satellite navigation data based on down-converting the satellite navigation data, and that the timing means is further for determining the timing scheme based on the satellite information.

In example 63, the subject-matter of any one of examples 61 to 62 can optionally include that the satellite receiver means is further for receiving satellite navigation data according to a navigation standard, and that the terrestrial transmitter is configured to transmit the beacon signals according to a communication standard different from the navigation standard.

In example 64, the subject-matter of example 63 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 65, the subject-matter of any one of examples 63 to 64 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 66, the subject-matter of any one of examples 61 to 65 can optionally include that the terrestrial transmitter means is further for transmitting the plurality of beacon signals including a location information, the location information based on the satellite navigation data.

In example 67, the subject-matter of any one of examples 61 to 66 can optionally include a terrestrial receiver means for receiving a beacon signal from another radiobeacon station, and that the terrestrial transmitter is further configured to transmit a time of arrival of the beacon signal received from the other radiobeacon station.

In example 68, the subject-matter of any one of examples 61 to 67 can optionally include a control information receiver means for receiving control information, and that the timing means is further for determining the timing scheme based on the control information.

Example 69 is a user device comprising: a beacon signal receiver means for receiving a beacon signal from a radiobeacon station, the radiobeacon station comprising a satellite receiver means for receiving satellite navigation data from a satellite, a timing means for determining a timing scheme based on the satellite navigation data, and a terrestrial transmitter means for transmitting a plurality of beacon signals based on (for example in accordance with) the determined timing scheme; and a location determination means for determining information indicating a location of the user device based on the received beacon signal.

In example 70, the subject-matter of example 69 can optionally include that the location determination means is further for determining the information indicating the location of the user device based on at least one of a time of arrival of the beacon signal or an angle of arrival of the beacon signal.

In example 71, the subject-matter of any one of examples 69 to 70 can optionally include that the beacon signal receiver means is configured according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 72, the subject-matter of any one of examples 69 to 71 can optionally include a satellite receiver means for receiving satellite navigation data from a satellite.

In example 73, the subject-matter of example 72 can optionally include that the satellite receiver means is configured according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 74, the subject-matter of any one of examples 72 to 73 can optionally include that the location determination means is further for determining the location of the user device further based on the satellite navigation data.

In example 75, the subject-matter of any one of examples 69 to 74 can optionally include a control information receiver means for receiving control information indicating a timing of the beacon signal.

Example 76 is a location determination system comprising: a plurality of radiobeacon stations, each radiobeacon station comprising a satellite receiver means for receiving satellite navigation data from a satellite, a timing means for determining a timing scheme based on the satellite navigation data, and a terrestrial transmitter means for transmitting a plurality of beacon signals based on (for example in accordance with) the determined timing scheme; and a user device comprising a beacon signal receiver means for receiving a beacon signal from a radiobeacon station, and a location determination means for determining information indicating a location of the user device based on the received beacon signal.

In example 77, the subject-matter of example 76 can optionally include that the plurality of radiobeacon stations are for time-synchronizing based on the satellite information.

Example 78 is a location determination system comprising: a radiobeacon station comprising a satellite receiver means for receiving satellite navigation data from a plurality of satellites, a location determination means for determining information indicating a location of the radiobeacon station based on the satellite navigation data received from the plurality of satellites, and a terrestrial transmitter means for transmitting a plurality of beacon signals, each beacon signal comprising the determined information indicating the location of the radiobeacon station; and a user device comprising a beacon signal receiver means for receiving a beacon signal from the radiobeacon station, and a location determination means for determining information indicating a location of the user device based on at least one of a time of arrival of the beacon signal or an angle of arrival of the beacon signal.

In example 79, the subject-matter of example 78 can optionally include that the radiobeacon station further comprises a down-conversion means for determining satellite information included in the satellite navigation data based on down-converting the satellite navigation data, and that location determination means is further for determining the information indicating the location of the radiobeacon station based on the satellite information.

In example 80, the subject-matter of any one of examples 78 to 79 can optionally include that the satellite receiver means of the radiobeacon station is for receiving satellite navigation data according to a navigation standard, and that the terrestrial transmitter means of the radiobeacon station is for transmitting the beacon signals according to a communication standard different from the navigation standard.

In example 81, the subject-matter of example 80 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 82, the subject-matter of any one of examples 80 to 81 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 83, the subject-matter of any one of examples 78 to 82 can optionally include that the radiobeacon station further comprises a timing means for determining a timing scheme based on the satellite navigation data, and that the terrestrial transmitter means is further for transmitting the plurality of beacon signals based on (for example in accordance with) the determined timing scheme.

In example 84, the subject-matter of any one of examples 78 to 83 can optionally include that the radiobeacon station further comprises a terrestrial receiver means for receiving a beacon signal from another radiobeacon station, and that the terrestrial transmitter means is further for transmitting a time of arrival of the beacon signal received from the other radiobeacon station.

In example 85, the subject-matter of any one of examples 78 to 84 can optionally include that the radiobeacon station further comprises a control information receiver means for receiving control information, and that the timing means is further for determining the timing scheme based on the control information.

In example 86, the subject-matter of any one of examples 78 to 85 can optionally include that the beacon signal receiver means of the user device is configured according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 87, the subject-matter of any one of examples 78 to 86 can optionally include that the user device further comprises a satellite receiver means for receiving satellite navigation data from a satellite.

In example 88, the subject-matter of example 87 can optionally include that the satellite receiver means of the user device is configured according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 89, the subject-matter of any one of examples 87 to 88 can optionally include that the location determination means of the user device is for determining the location of the user device further based on the satellite navigation data.

In example 90, the subject-matter of any one of examples 78 to 89 can optionally include that the user device further comprises a control information receiver means for receiving control information indicating a timing of the beacon signal.

Example 91 is a computer readable medium including program instructions which when executed by a processor cause the processor to perform a method for controlling a radiobeacon station, the computer readable medium further including program instructions which when executed by a processor cause the processor to perform: receiving satellite navigation data from a satellite; determining a timing scheme based on the satellite navigation data; and transmitting a plurality of beacon signals based on (for example in accordance with) the determined timing scheme.

In example 92, the subject-matter of example 91 can optionally include program instructions which when executed by a processor cause the processor to perform: determining satellite information included in the satellite navigation data based on down-converting the satellite navigation data; and determining the timing scheme based on the satellite information.

In example 93, the subject-matter of any one of examples 91 to 92 can optionally include program instructions which when executed by a processor cause the processor to perform: receiving satellite navigation data according to a navigation standard; and transmitting the beacon signals according to a communication standard different from the navigation standard.

In example 94, the subject-matter of example 93 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 95, the subject-matter of any one of examples 93 to 94 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 96, the subject-matter of any one of examples 91 to 95 can optionally include program instructions which when executed by a processor cause the processor to perform: transmitting the plurality of beacon signals including a location information, the location information based on the satellite navigation data.

In example 97, the subject-matter of any one of examples 91 to 96 can optionally include program instructions which when executed by a processor cause the processor to perform: receiving a beacon signal from another radiobeacon station; and transmitting a time of arrival of the beacon signal received from the other radiobeacon station.

In example 98, the subject-matter of any one of examples 91 to 97 can optionally include program instructions which when executed by a processor cause the processor to perform: receiving control information; and determining the timing scheme based on the control information.

Example 99 is a computer readable medium including program instructions which when executed by a processor cause the processor to perform a method for controlling a user device, the computer readable medium further including program instructions which when executed by a processor cause the processor to perform: receiving a beacon signal from a radiobeacon station, the radiobeacon station comprising a satellite receiver configured to receive satellite navigation data from a satellite, a timing circuit configured to determine a timing scheme based on the satellite navigation data, and a terrestrial transmitter configured to transmit a plurality of beacon signals based on (for example in accordance with) the determined timing scheme; and determining information indicating a location of the user device based on the received beacon signal.

In example 100, the subject-matter of example 99 can optionally include program instructions which when executed by a processor cause the processor to perform: determining the information indicating the location of the user device based on at least one of a time of arrival of the beacon signal or an angle of arrival of the beacon signal.

In example 101, the subject-matter of any one of examples 99 to 100 can optionally include program instructions which when executed by a processor cause the processor to perform: receiving the beacon signal according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 102, the subject-matter of any one of examples 99 to 101 can optionally include program instructions which when executed by a processor cause the processor to perform: receiving satellite navigation data from a satellite.

In example 103, the subject-matter of example 102 can optionally include program instructions which when executed by a processor cause the processor to perform: receiving the satellite navigation data according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 104, the subject-matter of any one of examples 102 to 103 can optionally include program instructions which when executed by a processor cause the processor to perform: determining the location of the user device further based on the satellite navigation data.

In example 105, the subject-matter of any one of examples 99 to 104 can optionally include program instructions which when executed by a processor cause the processor to perform: receiving control information indicating a timing of the beacon signal.

Example 106 is a computer readable medium including program instructions which when executed by a processor cause the processor to perform a location determination method, the computer readable medium further including program instructions which when executed by a processor cause the processor to perform: receiving satellite navigation data from a satellite in a plurality of radiobeacon stations; determining a timing scheme based on the satellite navigation data; transmitting a plurality of beacon signals based on (for example in accordance with) the determined timing scheme; receiving a beacon signal in a user device; and determining information indicating a location of the user device based on the received beacon signal.

In example 107, the subject-matter of example 106 can optionally include that the plurality of radiobeacon stations are configured to time-synchronize based on the satellite information.

Example 108 is a computer readable medium including program instructions which when executed by a processor cause the processor to perform a location determination method, the computer readable medium further including program instructions which when executed by a processor cause the processor to perform: receiving satellite navigation data from a plurality of satellites in a radiobeacon station; determining information indicating a location of the radiobeacon station based on the satellite navigation data received from the plurality of satellites; transmitting a plurality of beacon signals from the radiobeacon station, each beacon signal comprising the determined information indicating the location of the radiobeacon station; receiving a beacon signal from the radiobeacon station in a user device; and determining information indicating a location of the user device based on at least one of a time of arrival of the beacon signal or an angle of arrival of the beacon signal.

In example 109, the subject-matter of example 108 can optionally include program instructions which when executed by a processor cause the processor to perform: determining in the radiobeacon station satellite information included in the satellite navigation data based on down-converting the satellite navigation data; and determining the information indicating the location of the radiobeacon station based on the satellite information.

In example 110, the subject-matter of any one of examples 108 to 109 can optionally include program instructions which when executed by a processor cause the processor to perform: receiving satellite navigation data in the radiobeacon station according to a navigation standard; and transmitting the beacon signals from the radiobeacon station according to a communication standard different from the navigation standard.

In example 111, the subject-matter of example 110 can optionally include that the navigation standard comprises a navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Vertical Datum of 1988 (NAVD88); South American Datum of 1969 (SAD69); Spatial Reference System Identifier (SRID); Universal Transverse Mercator (UTM); and World Geodetic System (WGS84).

In example 112, the subject-matter of any one of examples 110 to 111 can optionally include that the communication standard comprises a communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 113, the subject-matter of any one of examples 108 to 112 can optionally include program instructions which when executed by a processor cause the processor to perform: determining a timing scheme based on the satellite navigation data; and transmitting the plurality of beacon signals based on (for example in accordance with) the determined timing scheme.

In example 114, the subject-matter of any one of examples 108 to 113 can optionally include program instructions which when executed by a processor cause the processor to perform: receiving a beacon signal from another radiobeacon station in the radiobeacon station; and transmitting a time of arrival of the beacon signal received from the other radiobeacon station from the radiobeacon station.

In example 115, the subject-matter of any one of examples 108 to 114 can optionally include program instructions which when executed by a processor cause the processor to perform: receiving control information in the radiobeacon station; and determining the timing scheme based on the control information.

In example 116, the subject-matter of any one of examples 108 to 115 can optionally include program instructions which when executed by a processor cause the processor to perform: receiving the beacon signal according to at least one communication standard selected from a list of communication standards consisting of: a Bluetooth radio communication technology, an Ultra Wide Band (UWB) radio communication technology, and/or a Wireless Local Area Network radio communication technology (for example according to an IEEE 802.11 (for example IEEE 802.11n) radio communication standard), IrDA (Infrared Data Association), Z-Wave and ZigBee, HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, IEEE 802.11VHT (VHT = Very High Throughput), Worldwide Interoperability for Microwave Access (WiMax) (for example according to an IEEE 802.16 radio communication standard, for example WiMax fixed or WiMax mobile), WiPro, HiperMAN (High Performance Radio Metropolitan Area Network) and/or IEEE 802.16m Advanced Air Interface, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (for example UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as 3GPP Generic Access Network, or GAN standard).

In example 117, the subject-matter of any one of examples 108 to 116 can optionally include program instructions which when executed by a processor cause the processor to perform: receiving satellite navigation data from a satellite in a user device.

In example 118, the subject-matter of example 117 can optionally include program instructions which when executed by a processor cause the processor to perform: receiving the satellite navigation data from the satellite in the user device according to at least one navigation standard selected from a list of navigation standards consisting of: global navigation satellite system (GNSS); Global Positioning System (GPS); Globalnaya navigatsionnaya sputnikovaya Sistema (GLONASS); Galileo; Indian Regional Navigational Satellite System (IRNSS); Beidou-2; European Dat 1950 (ED50); European Terrestrial Reference System 1989 (ETRS89); Geodetic Reference System 1980 (GRS 80); North American Datum of 1983 (NAD83); North American Reference System Identifier (SRID); Universal Transverse Mercator (UTM); and World Geodetic System (WGS84).

In example 119, the subject-matter of any one of examples 117 to 118 can optionally include program instructions which when executed by a processor cause the processor to perform: determining the location of the user device further based on the satellite navigation data.

In example 120, the subject-matter of any one of examples 108 to 119 can optionally include program instructions which when executed by a processor cause the processor to perform: receiving in the user device control information indicating a timing of the beacon signal.

## Claims

1. A radiobeacon station (100, 200, 602, 1100, 1902, 1904, 1906) comprising:
a satellite receiver (102, 1002, 1102) configured to receive satellite navigation data from a satellite;
a location determination circuit configured to determine information indicating a location of the radiobeacon station based on the satellite navigation data received from the satellite;
a terrestrial transmitter (106, 1106) configured to transmit a plurality of beacon signals based on a timing scheme, wherein each beacon signal includes the determined information indicating the location of the radiobeacon station;
a control information receiver (206, 1204) configured to receive control information comprising a unique time-slot within a repeat interval at which to transmit the beacon signals;
a timing circuit (104) configured to determine the timing scheme based on the satellite navigation data and the control information; and
a terrestrial receiver (204, 1202) configured to receive a beacon signal from another radiobeacon station;
wherein the terrestrial transmitter (106, 1106) is further configured to transmit a time of arrival of the beacon signal received from the other radiobeacon station and to transmit a beacon signal to a user device (300, 400, 1300, 1400),
wherein the radiobeacon station is located at a first geographic position for a first duration and located at a second geographic position for a second duration, wherein the second duration is subsequent to the first duration, and wherein the first geographic position is different from the second geographic position.

2. The radiobeacon station of claim 1, further comprising:
a down-conversion circuit (202) configured to determine satellite information included in the satellite navigation data based on down-converting the satellite navigation data;
wherein the timing circuit (104) is further configured to determine the timing scheme based on the satellite information.

3. The radiobeacon station of claims 1 or 2,
wherein the satellite receiver (102, 1002, 1102) is configured to receive satellite navigation data according to a navigation standard; and
wherein the terrestrial transmitter (106, 1106) is configured to transmit the beacon signals according to a communication standard different from the navigation standard.

4. A user device (300, 400, 604, 1300, 1400) comprising:
a beacon signal receiver (302) configured to receive a beacon signal from a radiobeacon station (100, 200, 602, 1100), the radiobeacon station comprising a satellite receiver (102) configured to receive satellite navigation data from a satellite, a terrestrial transmitter (106) configured to transmit a plurality of beacon signals based on a timing scheme, a control information receiver (206, 1204) configured to receive control information comprising a unique time-slot within a repeat interval at which to transmit the beacon signals, and a timing circuit (104) configured to determine the timing scheme based on the satellite navigation data and the control information, a terrestrial receiver (204, 1202) configured to receive a beacon signal from another radiobeacon station, wherein the terrestrial transmitter (106, 1106) is further configured and to transmit a beacon signal to the user device, wherein the radiobeacon station is located at a first geographic position for a first duration and located at a second geographic position for a second duration, wherein the second duration is subsequent to the first duration, and wherein the first geographic position is different from the second geographic position;
a control information receiver (404, 1404) configured to receive control information indicating a timing of the beacon signal, the timing relating to a unique time-slot at which the radiobeacon station is to transmit the beacon signal; and
a location determination circuit (304, 1304) configured to determine information indicating a location of the user device based on the received beacon signal, and based on at least one of a time of arrival of the beacon signal.

5. The user device of claim 4,
wherein the location determination circuit (304, 1304) is further configured to determine the information indicating the location of the user device (300, 400, 604, 1300, 1400) based on an angle of arrival of the beacon signal.

6. The user device of claims 4 or 5, further comprising:
a satellite receiver (402, 1402) configured to receive satellite navigation data from a satellite.

7. The user device of claim 6,
wherein the location determination circuit (304) is further configured to determine the location of the user device (300, 400, 604, 1300, 1400) further based on the satellite navigation data.

8. A location determination system (500, 600, 1500) comprising:
a plurality of radiobeacon stations (100, 200, 602, 1100), each radiobeacon station comprising: a satellite receiver (102, 1002, 1102) configured to receive satellite navigation data from a satellite, a location determination circuit configured to determine information indicating a location of the radiobeacon station based on the satellite navigation data received from the satellite, a terrestrial transmitter (106, 1106) configured to transmit a plurality of beacon signals based on a timing scheme, wherein each beacon signal includes the determined information indicating the location of the radiobeacon station, wherein the radiobeacon station is located at a first geographic position for a first duration and located at a second geographic position for a second duration, wherein the second duration is subsequent to the first duration, and wherein the first geographic position is different from the second geographic position, a control information receiver (206, 1204) configured to receive control information comprising a unique time-slot within a repeat interval at which to transmit the beacon signals, a timing circuit (104) configured to determine the timing scheme based on the satellite navigation data and the control information, and a terrestrial receiver (204, 1202) configured to receive a beacon signal from another radiobeacon station, wherein the terrestrial transmitter (106, 1106) is further configured to transmit a time of arrival of the beacon signal received from the other radiobeacon station, and to transmit a beacon signal to a user device (300, 400, 1300, 1400); and
a user device (300, 400, 604, 1300, 1400) comprising: a beacon signal receiver (302) configured to receive a beacon signal from a radiobeacon station (100, 200, 602, 1100), wherein the beacon signal receiver (302) is further configured to receive a beacon signal from another radiobeacon station; a control information receiver (404, 1404) configured to receive control information indicating a timing of the beacon signal, the timing relating to a unique time-slot at which the radiobeacon station is to transmit the beacon signal; and a location determination circuit (304, 1304) configured to determine information indicating a location of the user device (300, 400, 604, 1300) based on the received beacon signal from the plurality of radiobeacon stations (100, 200, 602, 1100).

9. The location determination system of claim 8, wherein the plurality of radiobeacon stations (100, 200, 602, 1100, 1902, 1904, 1906) are configured to time-synchronize based on the satellite information.

10. A location determination method comprising:
receiving (902) satellite navigation data from a satellite in a plurality of radiobeacon stations;
determining information indicating a location of the radiobeacon station based on the satellite navigation data received from the satellite;
receiving control information comprising a unique time-slot within a repeat interval at which to transmit the beacon signals;
determining (904) a timing scheme based on the satellite navigation data and the control information;
transmitting (906) a plurality of beacon signals based on the determined timing scheme, wherein each beacon signal includes the determined information indicating the location of the radiobeacon station, wherein the radiobeacon station is located at a first geographic position for a first duration and located at a second geographic position for a second duration, wherein the second duration is subsequent to the first duration, and wherein the first geographic position is different from the second geographic position;
receiving (908) a beacon signal from the radiobeacon station in a user device;
receiving control information indicating a timing of the beacon signal, the timing relating to a unique time-slot at which the radiobeacon station is to transmit the beacon signal; and
determining (910) information indicating a location of the user device based on the received beacon signal, and based on at least one of a time of arrival of the beacon signal.

11. A computer readable medium including executable program instructions, wherein the program causes the system of claim 8 to execute the steps of the method of claim 10.

## Patentansprüche

1. Funkbakenstation (100, 200, 602, 1100, 1902, 1904, 1906), umfassend:
einen Satellitenempfänger (102, 1002, 1102), ausgelegt zum Empfangen von Satellitennavigationsdaten von einem Satelliten;
eine Standortsbestimmungsschaltung, ausgelegt zum Bestimmen von einen Standort der Funkbakenstation angebenden Informationen auf der Basis der von dem Satelliten empfangenen Satellitennavigationsdaten;
einen terrestrischen Sender (106, 1106), ausgelegt zum Senden mehrerer Bakensignale auf der Basis eines Timingschemas, wobei jedes Bakensignal die bestimmten den Standort der Funkbakenstation angebenden Informationen umfasst;
einen Steuerinformationsempfänger (206, 1204), ausgelegt zum Empfangen von Steuerinformationen, die einen einzigartigen Zeitschlitz in einem Wiederholungsintervall, worin die Bakensignale zu senden sind, umfassen;
eine Timingschaltung (104), ausgelegt zum Bestimmen des Timingschemas auf der Basis der Satellitennavigationsdaten und der Steuerinformationen; und
einen terrestrischen Empfänger (204, 1202), ausgelegt zum Empfangen eines Bakensignals von einer anderen Funkbakenstation;
wobei der terrestrische Sender (106, 1106) ferner ausgelegt ist zum Senden einer Ankunftszeit des von der anderen Funkbakenstation empfangenen Bakensignals und zum Senden eines Bakensignals zu einer Benutzervorrichtung (300, 400, 1300, 1400),
wobei sich die Funkbakenstation für eine erste Dauer an einer ersten geografischen Position befindet und für eine zweite Dauer an einer zweiten geografischen Position befindet, wobei die zweite Dauer der ersten Dauer folgt und wobei die erste geografische Position von der zweiten geografischen Position verschieden ist.

2. Funkbakenstation nach Anspruch 1, ferner umfassend:
eine Abwärtsumsetzungsschaltung (202), ausgelegt zum Bestimmen von in den Satellitennavigationsdaten enthaltenen Satelliteninformationen auf der Basis von Abwärtsumsetzung der Satellitennavigationsdaten;
wobei die Timingschaltung (104) ferner ausgelegt ist zum Bestimmen des Timingschemas auf der Basis der Satelliteninformationen.

3. Funkbakenstation nach Anspruch 1 oder 2,
wobei der Satellitenempfänger (102, 1002, 1102) ausgelegt ist zum Empfangen von Satellitennavigationsdaten gemäß einem Navigationsstandard; und
wobei der terrestrische Sender (106, 1106) ausgelegt ist zum Senden der Bakensignale gemäß einem von dem Navigationsstandard verschiedenen Kommunikationsstandard.

4. Benutzervorrichtung (300, 400, 604, 1300, 1400), umfassend:
einen Bakensignalempfänger (302), ausgelegt zum Empfangen eines Bakensignals von einer Funkbakenstation (100, 200, 602, 1100), wobei die Funkbakenstation einen Satellitenempfänger (102), ausgelegt zum Empfangen von Satellitennavigationsdaten von einem Satelliten; einen terrestrischen Sender (106), ausgelegt zum Senden mehrerer Bakensignale auf der Basis eines Timingschemas; einen Steuerinformationsempfänger (206, 1204), ausgelegt zum Empfangen von Steuerinformationen, die einen einzigartigen Zeitschlitz in einem Wiederholungsintervall, worin die Bakensignale zu senden sind, umfassen; und eine Timingschaltung (104), ausgelegt zum Bestimmen des Timingschemas auf der Basis der Satellitennavigationsdaten und der Steuerinformationen; einen terrestrischen Empfänger (204, 1202), ausgelegt zum Empfangen eines Bakensignals von einer anderen Funkbakenstation umfasst, wobei der terrestrische Sender (106, 1106) ferner ausgelegt ist zum Senden eines Bakensignals zu der Benutzervorrichtung, wobei sich die Funkbakenstation für eine erste Dauer an einer ersten geografischen Position befindet und für eine zweite Dauer an einer zweiten geografischen Position befindet, wobei die zweite Dauer der ersten Dauer folgt und wobei die erste geografische Position von der zweiten geografischen Position verschieden ist;
einen Steuerinformationsempfänger (404, 1404), ausgelegt zum Empfangen von Steuerinformationen, die ein Timing des Bakensignals angeben, wobei das Timing einen einzigartigen Zeitschlitz betrifft, worin die Funkbakenstation das Bakensignal senden soll; und
eine Standortbestimmungsschaltung (304, 1304), ausgelegt zum Bestimmen von einen Standort der Benutzervorrichtung angebenden Informationen auf der Basis des empfangenen Bakensignals und auf der Basis mindestens einer Ankunftszeit des Bakensignals.

5. Benutzervorrichtung nach Anspruch 4,
wobei die Standortbestimmungsschaltung (304, 1304) ferner ausgelegt ist zum Bestimmen der den Standort der Benutzervorrichtung (300, 400, 604, 1300, 1400) angebenden Informationen auf der Basis eines Ankunftswinkels des Bakensignals.

6. Benutzervorrichtung nach Anspruch 4 oder 5, ferner umfassend:
einen Satellitenempfänger (402, 1402), ausgelegt zum Empfangen von Satellitennavigationsdaten von einem Satelliten.

7. Benutzervorrichtung nach Anspruch 6,
wobei die Standortbestimmungsschaltung (304) ferner ausgelegt ist zum Bestimmen des Standorts der Benutzervorrichtung (300, 400, 604, 1300, 1400) ferner auf der Basis der Satellitennavigationsdaten.

8. Standortbestimmungssystem (500, 600, 1500), umfassend:
mehrere Funkbakenstationen (100, 200, 602, 1100), wobei jede Funkbakenstation Folgendes umfasst: einen Satellitenempfänger (102, 1002, 1102), ausgelegt zum Empfangen von Satellitennavigationsdaten von einem Satelliten; eine Standortsbestimmungsschaltung, ausgelegt zum Bestimmen von einen Standort der Funkbakenstation angebenden Informationen auf der Basis der von dem Satelliten empfangenen Satellitennavigationsdaten; einen terrestrischen Sender (106, 1106), ausgelegt zum Senden mehrerer Bakensignale auf der Basis eines Timingschemas, wobei jedes Bakensignal die bestimmten den Standort der Funkbakenstation angebenden Informationen umfasst; wobei sich die Funkbakenstation für eine erste Dauer an einer ersten geografischen Position befindet und für eine zweite Dauer an einer zweiten geografischen Position befindet, wobei die zweite Dauer der ersten Dauer folgt und wobei die erste geografische Position von der zweiten geografischen Position verschieden ist, einen Steuerinformationsempfänger (206, 1204), ausgelegt zum Empfangen von Steuerinformationen, die einen einzigartigen Zeitschlitz in einem Wiederholungsintervall umfassen, worin die Bakensignale zu senden sind, eine Timingschaltung (104), ausgelegt zum Bestimmen des Timingschemas auf der Basis der Satellitennavigationsdaten und der Steuerinformationen, und einen terrestrischen Empfänger (204, 1202), ausgelegt zum Empfangen eines Bakensignals von einer anderen Funkbakenstation, wobei der terrestrische Sender (106, 1106) ferner ausgelegt ist zum Senden einer Ankunftszeit des von der anderen Funkbakenstation empfangenen Bakensignals und zum Senden des Bakensignals zu einer Benutzervorrichtung (300, 400, 1300, 1400); und
eine Benutzervorrichtung (300, 400, 604, 1300, 1400), umfassend: einen Bakensignalempfänger (302), ausgelegt zum Empfangen eines Bakensignals von einer Funkbakenstation (100, 200, 602, 1100), wobei der Bakensignalempfänger (302) ferner ausgelegt ist zum Empfangen eines Bakensignals von einer anderen Funkbakenstation; einen Steuerinformationsempfänger (404, 1404), ausgelegt zum Empfangen von Steuerinformationen, die ein Timing des Bakensignals angeben, wobei das Timing einen einzigartigen Zeitschlitz betrifft, worin die Funkbakenstation das Bakensignal senden soll; und eine Standortbestimmungsschaltung (304, 1304), ausgelegt zum Bestimmen von Informationen, die einen Standort der Benutzervorrichtung (300, 400, 604, 1300) angeben, auf der Basis des empfangenen Bakensignals von den mehreren Funkbakenstationen (100, 200, 602, 1100).

9. Standortbestimmungssystem nach Anspruch 8, wobei die mehreren Funkbakenstationen (100, 200, 602, 1100, 1902, 1904, 1906) dafür ausgelegt sind, sich auf der Basis der Satelliteninformationen zeitlich zu synchronisieren.

10. Standortbestimmungsverfahren, umfassend:
Empfangen (902) von Satellitennavigationsdaten von einem Satelliten in mehreren Funkbakenstationen;
Bestimmen von Informationen, die einen Standort der Funkbakenstation angeben, auf der Basis der von dem Satelliten empfangenen Satellitennavigationsdaten;
Empfangen von Steuerinformationen, die einen einzigartigen Zeitschlitz in einem Wiederholungsintervall umfassen, worin die Bakensignale zu senden sind;
Bestimmen (904) eines Timingschemas auf der Basis der Satellitennavigationsdaten und der Steuerinformationen;
Senden (906) mehrerer Bakensignale auf der Basis des bestimmten Timingschemas, wobei jedes Bakensignal die bestimmten Informationen umfasst, die den Standort der Funkbakenstation angeben, wobei sich die Funkbakenstation für eine erste Dauer an einer ersten geografischen Position befindet und für eine zweite Dauer an einer zweiten geografischen Position befindet, wobei die zweite Dauer der ersten Dauer folgt und wobei die erste geografische Position von der zweiten geografischen Position verschieden ist;
Empfangen (908) eines Bakensignals von der Funkbakenstation in einer Benutzervorrichtung;
Empfangen von Steuerinformationen, die ein Timing des Bakensignals angeben, wobei das Timing einen einzigartigen Zeitschlitz betrifft, worin die Funkbakenstation das Bakensignal senden soll; und
Bestimmen (910) von einen Standort der Benutzervorrichtung angebenden Informationen auf der Basis des empfangenen Bakensignals und auf der Basis mindestens einer Ankunftszeit des Bakensignals.

11. Computerlesbares Medium, das ausführbare Programmanweisungen umfasst, wobei das Programm bewirkt, dass das System nach Anspruch 8 die Schritte des Verfahrens nach Anspruch 10 ausführt.

## Revendications

1. Station de radiobalises (100, 200, 602, 1100, 1902, 1904, 1906) comprenant :
un récepteur satellitaire (102, 1002, 1102) configuré pour recevoir des données de navigation satellitaires en provenance d'un satellite ;
un circuit de détermination de localisation configuré pour déterminer des informations indiquant une localisation de la station de radiobalises sur la base des données de navigation satellitaires reçues en provenance du satellite ;
un émetteur terrestre (106, 1106) configuré pour émettre une pluralité de signaux de balise sur la base d'un schéma de synchronisation, dans lequel chaque signal de balise inclut les informations déterminées indiquant la localisation de la station de radiobalises ;
un récepteur d'informations de commande (206, 1204) configuré pour recevoir des informations de commande comprenant un créneau temporel inédit au sein d'un intervalle de répétition auquel il s'agit d'émettre les signaux de balise ;
un circuit de synchronisation (104) configuré pour déterminer le schéma de synchronisation sur la base des données de navigation satellitaires et des informations de commande ; et
un récepteur terrestre (204, 1202) configuré pour recevoir un signal de balise en provenance d'une autre station de radiobalises ;
dans laquelle l'émetteur terrestre (106, 1106) est configuré en outre pour émettre un temps d'arrivée du signal de balise reçu en provenance de l'autre station de radiobalises et pour émettre un signal de balise à un dispositif utilisateur (300, 400, 1300, 1400),
la station de radiobalises étant localisée à une première position géographique pendant une première durée et localisée à une deuxième position géographique pendant une deuxième durée, la deuxième durée faisant suite à la première durée, et la première position géographique étant différente de la deuxième position géographique.

2. Station de radiobalises de la revendication 1, comprenant en outre :
un circuit de conversion d'abaissement (202) configuré pour déterminer des informations satellitaires incluses dans les données de navigation satellitaires basées sur la conversion d'abaissement des données de navigation satellitaires ;
dans laquelle le circuit de synchronisation (104) est configuré en outre pour déterminer le schéma de synchronisation sur la base des informations satellitaires.

3. Station de radiobalises des revendications 1 ou 2,
dans laquelle le récepteur satellitaire (102, 1002, 1102) est configuré pour recevoir des données de navigation satellitaires suivant une norme de navigation ; et
dans laquelle l'émetteur terrestre (106, 1106) est configuré pour émettre des signaux de balise suivant une norme de communication différente de la norme de navigation.

4. Dispositif utilisateur (300, 400, 604, 1300, 1400) comprenant :
un récepteur de signaux de balise (302) configuré pour recevoir un signal de balise en provenance d'une station de radiobalises (100, 200, 602, 1100), la station de radiobalises comprenant un récepteur satellitaire (102) configuré pour recevoir des données de navigation satellitaires en provenance d'un satellite, un émetteur terrestre (106) configuré pour émettre une pluralité de signaux de balise sur la base d'un schéma de synchronisation, un récepteur d'informations de commande (206, 1204) configuré pour recevoir des informations de commande comprenant un créneau temporel inédit au sein d'un intervalle de répétition auquel il s'agit d'émettre les signaux de balise, et un circuit de synchronisation (104) configuré pour déterminer le schéma de synchronisation sur la base des données de navigation satellitaires et des informations de commande, un récepteur terrestre (204, 1202) configuré pour recevoir un signal de balise en provenance d'une autre station de radiobalises, dans lequel l'émetteur terrestre (106, 1106) est configuré en outre et pour émettre un signal de balise au dispositif utilisateur, dans lequel la station de radiobalises est localisée à une première position géographique pendant une première durée et localisée à une deuxième position géographique pendant une deuxième durée, la deuxième durée faisant suite à la première durée, et la première position géographique étant différente de la deuxième position géographique ;
un récepteur d'informations de commande (404, 1404) configuré pour recevoir des informations de commande indiquant une synchronisation du signal de balise, la synchronisation étant relative à un créneau temporel inédit auquel la station de balises est destinée à émettre le signal de balise ; et
un circuit de détermination de localisation (304, 1304) configuré pour déterminer des informations indiquant une localisation du dispositif utilisateur sur la base du signal de balise reçu, et basé au moins sur un temps d'arrivée du signal de balise.

5. Dispositif utilisateur de la revendication 4,
dans lequel le circuit de détermination de localisation (304, 1304) est configuré en outre pour déterminer les informations indiquant la localisation du dispositif utilisateur (300, 400, 604, 1300, 1400) sur la base d'un angle d'arrivée du signal de balise.

6. Dispositif utilisateur des revendications 4 ou 5, comprenant en outre :
un récepteur satellitaire (402, 1402) configuré pour recevoir des données de navigation satellitaires en provenance d'un satellite.

7. Dispositif utilisateur de la revendication 6,
dans lequel le circuit de détermination de localisation (304) est configuré en outre pour déterminer la localisation du dispositif utilisateur (300, 400, 604, 1300, 1400) basé en outre sur les données de navigation satellitaires.

8. Système de détermination de localisation (500, 600, 1500) comprenant :
une pluralité de stations de radiobalises (100, 200, 602, 1100), chaque station de radiobalises comprenant : un récepteur satellitaire (102, 1002, 1102) configuré pour recevoir des données de navigation satellitaires en provenance d'un satellite, un circuit de détermination de localisation configuré pour déterminer des informations indiquant une localisation de la station de radiobalises sur la base des données de navigation satellitaires reçues en provenance du satellite, un émetteur terrestre (106, 1106) configuré pour émettre une pluralité de signaux de balise sur la base d'un schéma de synchronisation, dans lequel chaque signal de balise inclut les informations déterminées indiquant la localisation de la station de radiobalises, la station de radiobalises étant localisée à une première position géographique pendant une première durée et localisée à une deuxième position géographique pendant une deuxième durée, la deuxième durée faisant suite à la première durée, et la première position géographique étant différente de la deuxième position géographique, un récepteur d'informations de commande (206, 1204) configuré pour recevoir des informations de commande comprenant un créneau temporel inédit au sein d'un intervalle de répétition auquel il s'agit d'émettre les signaux de balise, un circuit de synchronisation (104) configuré pour déterminer le schéma de synchronisation sur la base des données de navigation satellitaires et des informations de commande, et un récepteur terrestre (204, 1202) configuré pour recevoir un signal de balise en provenance d'une autre station de radiobalises, dans lequel l'émetteur terrestre (106, 1106) est configuré en outre pour émettre un temps d'arrivée du signal de balise reçu en provenance de l'autre station de radiobalises, et pour émettre un signal de balise à un dispositif utilisateur (300, 400, 1300, 1400) ; et
un dispositif utilisateur (300, 400, 604, 1300, 1400) comprenant : un récepteur de signaux de balise (302) configuré pour recevoir un signal de balise en provenance d'une station de radiobalises (100, 200, 602, 1100), le récepteur de signaux de balise (302) étant configuré en outre pour recevoir un signal de balise en provenance d'une autre station de radiobalises ; un récepteur d'informations de commande (404, 1404) configuré pour recevoir des informations de commande indiquant une synchronisation du signal de balise, la synchronisation étant relative à un créneau temporel inédit auquel la station de balises est destinée à émettre le signal de balise ; et un circuit de détermination de localisation (304, 1304) configuré pour déterminer des informations indiquant une localisation du dispositif utilisateur (300, 400, 604, 1300) sur la base du signal de balise reçu en provenance de la pluralité de stations de radiobalises (100, 200, 602, 1100).

9. Système de détermination de localisation de la revendication 8, dans lequel la pluralité de stations de radiobalises (100, 200, 602, 1100, 1902, 1904, 1906) sont configurées pour se synchroniser dans le temps sur la base des informations satellitaires.

10. Procédé de détermination de localisation comprenant :
la réception (902) de données de navigation satellitaires en provenance d'un satellite dans une pluralité de stations de radiobalises ;
la détermination d'informations indiquant une localisation de la station de radiobalises sur la base des données de navigation satellitaires reçues en provenance du satellite ;
la réception d'informations de commande comprenant un créneau temporel inédit au sein d'un intervalle de répétition auquel il s'agit d'émettre les signaux de balise ;
la détermination (904) d'un schéma de synchronisation sur la base des données de navigation satellitaires et des informations de commande ;
l'émission (906) d'une pluralité de signaux de balise sur la base du schéma de synchronisation déterminé, dans lequel chaque signal de balise inclut les informations déterminées indiquant la localisation de la station de radiobalises, la station de radiobalises étant localisée à une première position géographique pendant une première durée et localisée à une deuxième position géographique pendant une deuxième durée, la deuxième durée faisant suite à la première durée, et la première position géographique étant différente de la deuxième position géographique ;
la réception (908) d'un signal de balise en provenance d'une station de radiobalises dans un dispositif utilisateur ;
la réception d'informations de commande indiquant une synchronisation du signal de balise, la synchronisation étant relative à un créneau temporel inédit auquel la station de balises est destinée à émettre le signal de balise ; et
la détermination (910) d'informations indiquant une localisation du dispositif utilisateur sur la base du signal de balise reçu, et basé sur au moins un temps d'arrivée du signal de balise.

11. Support lisible par ordinateur incluant des instructions de programme exécutables, le programme amenant le système de la revendication 8 à exécuter les étapes du procédé de la revendication 10.
